# EUROPEAN PATENT APPLICATION

(11) **EP 1 304 692 A1**
(43) Date of publication of application: **23.04.2003**
(21) Application number: 01938753.9
(22) Date of filing: 19.06.2001
(51) Int. Cl.: G11B 11/105, G11B 7/24, G11B 7/26, G11B 7/007, G11B 7/005, G11B 7/095

(54) **OPTICAL DISK RECORDING MEDIUM, OPTICAL DISK DEVICE, AND MASTER PRODUCTION METHOD**

(30) Priority: 22.06.2000 JP 2000188200
(71) Applicant: MATSUSHITA ELECTRIC INDUSTRIAL CO., LTD., Kadoma-shi, Osaka 571-8501 (JP)
(72) Inventor: HINO, Yasumori, Ikoma-shi, Nara 631-0112 (JP); MURAKAMI, Motoyoshi, Hirakata-shi, Osaka 573-0081 (JP); KAWAGUCHI, Yuko, Ibaraki-shi, Osaka 567-0046 (JP)
(74) Representative: Schirdewahn, Jürgen
(86) International application number: JP0105232
(87) International publication number: WO01099103

(57) **Abstract**

The present invention provides an optical disc recording medium capable of carrying out stable tracking servo and high-density recording/reproduction, an optical disc apparatus for the medium, and a method of producing an original master for the medium. The optical disc recording medium in accordance with the present invention has data recording regions divided into a plurality of segments disposed in groove portions, inter-groove portions or both the groove portions and the inter-groove portions disposed spirally or concentrically, and a plurality of pre-pit regions having a pair of wobble pits disposed between the data recording regions on a disc-shaped magneto-optical recording medium.

## Description

### TECHNICAL FIELD

The present invention relates to an optical disc recording medium that records and erases information by using a rise in temperature due to the radiation of laser light and reads recorded signals by using a magneto-optical effect, to an optical disc apparatus for carrying out recording and reproduction thereon, and to a method of producing an original master therefor.

### BACKGROUND ART

As an optical memory capable of reproducing information by radiating a light beam to an information recording medium and by detecting its reflected light, various types of optical memories have been proposed, such as a ROM-type memory in which information has been recorded by using phase pits, a write-once-type optical memory in which information is recorded by opening pits in a recording film by the radiation of a light beam, a phase-change-type optical memory in which recording is carried out by changing the crystal phase of the recording film by the radiation of a light beam, and a magneto-optical memory for carrying out recording by changing the magnetization direction of a recording layer by the radiation of a light beam and the application of a magnetic field.

In these optical memories, the reproduction resolution of a signal was almost determined by the wavelength λ of reproduction light and the numerical aperture (NA) of an objective lens, and the pit period in a detection limit was about λ/(2·NA). However, since it is not easy to shorten the wavelength of the reproduction light or to increase the numerical aperture of the objective lens, attempts to increase the recording density of information by devising a recording medium or a reproduction method have been taken. In particular, in the case of an optical disc recording medium, various attempts to increase the information recording density have been proposed.

For example, Japanese Laid-open Patent Application No. Hei 6-290496 discloses a technology for improving reproduction resolution beyond the above-mentioned detection limit determined by the wavelength and the numerical aperture of the objective lens by displacing domain walls approaching a light beam for reproduction one after another and by detecting this displacement of the domain walls (the DWDD system). In this technology, if at least one or all of a reproduction layer serving as a first magnetic layer wherein domain walls are displaced when approaching the light beam for reproduction, a recording layer for holding a recorded signal and a switching layer for controlling the magnetic coupling between the recording layer and the reproduction layer are separated magnetically between information tracks, a particularly excellent reproduced signal can be obtained.

In order to carry out magnetic separation between the information tracks of the magnetic layer, a method of carrying out laser annealing between the information tracks is available. In this method, laser is radiated to the space between recording tracks to raise the temperature, whereby the magnetic characteristic of the magnetic layer is changed, thereby carrying out magnetic separation between the tracks

In addition, a method wherein the grooves in an optical disc recording medium are used as recording tracks, and inter-groove portions formed between adjacent recording tracks (the groove portion is also referred to as a "groove" and the inter-groove portion is also referred to as a "land") are used to separate the domain wall displacement layer (Japanese Laid-open Patent Application No. Hei 11-120636). A method of using only the groove portions as information data recording regions (recording track regions) can securely carry out magnetic shutoff between the adjacent groove portions even if the grooves are relatively shallow. (Japanese Patent Application No. 2000-163775 by the same inventors as those of the present application).

Conversely, a method wherein the inter-groove portions (lands) of an optical disc recording medium are used as recording tracks, and groove portions (grooves) formed between adjacent recording tracks are used to separate the domain wall displacement layer. It is disclosed that a method of using only the inter-groove portions as information data recording regions can also obtain an excellent reproduction characteristic conforming to the DWDD system by increasing the depth of the groove portions to some extent (expanded magnetic domains are formed by the displacement of the domain walls in the reproduction layer) (Lecture No. TuC1 at Optical Data Storage Topical Meeting, 2000).

In an optical disc recording medium wherein both the land portions and the groove portions are used as recording tracks, a method of separating the domain wall displacement layer by using the steps at the slant faces of the lands and grooves has been proposed (Japanese Laid-open Patent Application No. Hei 11-120636). This method of using both the lands and grooves as recording tracks can raise track density.

Furthermore, in order to improve the recording density of an optical disc recording medium, improvement not only in linear density but also track density becomes a big task. In improving the track density, a method of accurately carrying out tracking along the recording tracks disposed at a narrow track pitch also becomes a big task; hence, the tracking method for a prior art optical disc recording medium will also be described below briefly. Many optical disc apparatuses generally use the push-pull tracking system wherein tracking control is carried out so that the balances of primary diffraction light generating from the grooves in the recording tracks become equal (Japanese Laid-open Patent Application No. Sho 49-60702). This primary diffraction light becomes maximum when the depth of the groove is {j/(8 n)}λ (j = 1, 3, 5, ..., n: the refractive index of the substrate, and λ: the wavelength of the light) and becomes minimum when the depth is {k/(8 n)}λ (k = 2, 4, 6, ...).

Furthermore, a three-beam tracking system is available, wherein a light beam is divided into three light beams comprising one main beam and two sub-beams by using a diffraction grating, the divided sub-beams are disposed so as to be shifted by the 1/2 period of the track pitch, and tracking is carried out so that the amounts of light from the groove tracks become equal. This system is similar to the push-pull system in a sense that grooves are used, as the form of the optical disc recording medium.

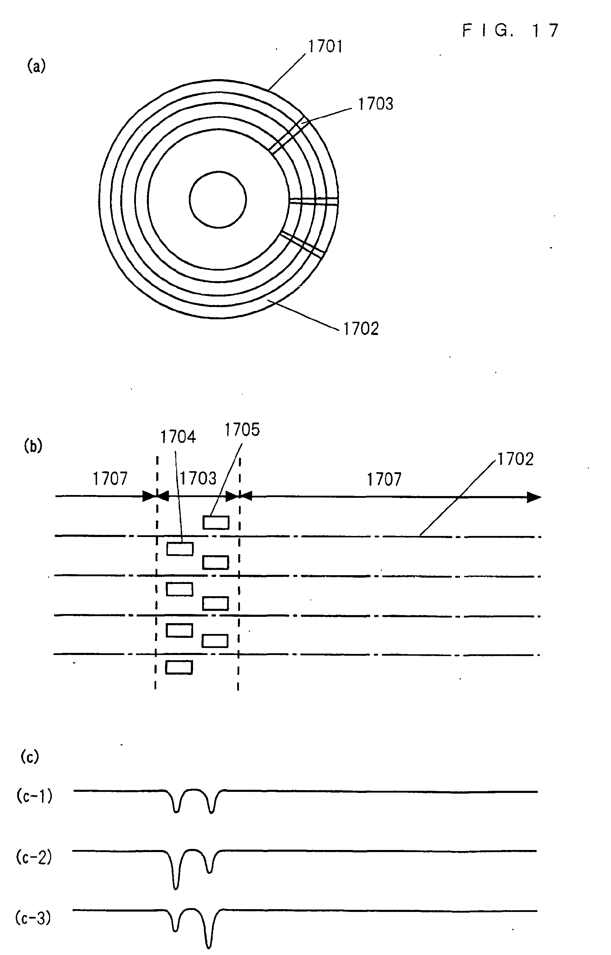

The sample servo system is a system for carrying out tracking by using a set of wobble pits that wobble by a constant distance from a recording track on the disc. This system will be described below briefly by using FIG. 17. In FIG. 17, numeral 1701 designates an optical disc recording medium, numeral 1702 designates a data recording region, and numeral 1703 designates a servo region (pre-pit region). The servo region 1703 has a pair of wobble pits 1704 and 1705 that shift (wobble) left and right from the extension line of the data recording region 1702. The data recording region 1702 has a length of 1707. The pre-pit region (for example, the pre-pit region 1703) is provided radially at about 1000 positions in one track.

If the light beam is accurately placed on-track at the center of the data recording region 1702 (if the light beam is radiated to the center of the track), the amounts of reflected light from the servo pits 1704 and 1705 become equal to each other as indicated by solid lines in (c-1) of the portion (c) of FIG. 17. If the light beam passes off-track from the center of the data recording region to a side approaching the servo pit 1704 (deviates from the center of the track), the amplitude at the time of passing the servo pit 1705 decreases (the amount of reflected light increases), and the amplitude at the time of passing the servo pit 1704 increases (the amount of reflected light decreases) as indicated by the broken line in (c-2) of the portion (c) of FIG. 17. Conversely, if the light beam passes off-track from the center of the data recording region to a side approaching the servo pit 1705, the amplitude at the time of passing the servo pit 1704 decreases (the amount of reflected light increases), and the amplitude at the time of passing the servo pit 1705 increases (the amount of reflected light decreases) as indicated by the long and short dash line in (c-3) of the portion (c) of FIG. 17.

In other words, if control is carried out so that the amount of reflected light from the servo pit 1704 becomes equal to the amount of reflected light from the servo pit 1705, the light beam can carry out tracking along the center of the data recording region. This system is the sample servo system. This sample servo system generates a tracking error signal depending on the change in the whole amount of light, whereby the system is characterized by very high resistance against disturbance, such as the inclination of the optical disc recording medium and the shift of the condenser lens, (tracking servo is hardly disturbed). However, since the data recording region is required to be spatially separated from the region for generating a servo signal, the system is less advantageous than the tracking system that uses grooves, with respect to redundancy, that is, disc usability.

To compensate for this decrease in redundancy, a system comprising the combination of the push-pull system and the sample servo system has also been proposed (Japanese Laid-open Patent Application No. Sho 62-134830).

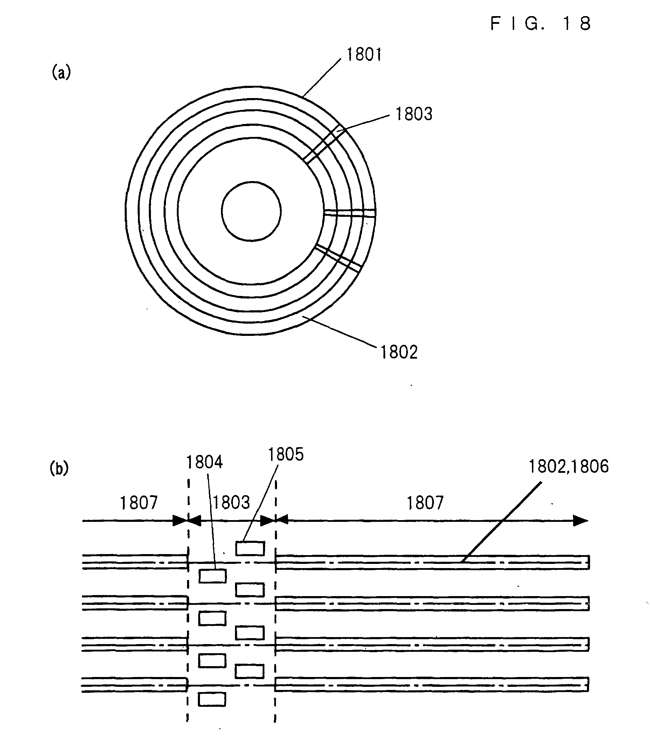

This system will be described below by using FIG. 18. In the portion (a) of FIG. 18, numeral 1801 designates an optical disc recording medium, numeral 1802 designates a data recording region, and numeral 1803 designates a servo region (pre-pit region). The pre-pit region 1803 has wobble pits 1804 and 1805 for track error detection. The data recording region 1802 having a length of 1807 is provided in the groove portion 1806 for a tracking guide.

This system uses the push-pull tracking system that carries out tracking servo by usually using diffraction light from the groove portion 1806. About several tens of servo regions are embedded in one track circuit and correct tracking errors occurring owing to the inclination of the disc and the shift of the lens in the tracking system conforming to the push-pull system. With this system, by providing several tens of servo regions, the accuracy of tracking by the push-pull tracking system can be improved. In addition, since this system sufficiently operates by providing several tens of servo regions, the proportion of the servo regions in the surface area of the optical disc recording medium can be made smaller (the proportion of the data recording regions can be made larger) in comparison with the sample servo system provided with numerous servo regions, thereby being advantageous.

Another object of the present invention is to attain an optical disc recording medium being capable of obtaining a sufficient track error signal even when the distance between the recording tracks is narrowed and having high format efficiency. Furthermore, still another object is to attain an optical disc apparatus for carrying out recording and reproduction on this optical disc recording medium. Moreover, a further object is to attain an optical disc recording medium by using the groove portions or the inter-groove portions or both of them as data recording regions, wherein a reproduced signal having a certain level or higher is obtained even when magnetic shutoff is carried out between the recording tracks so that reproduction by the DWDD system can be carried out, and, concurrently, a light beam is used for tracking, to attain an optical disc apparatus for the recording and reproduction, and to attain a method of producing an original master for the optical disc recording medium.

In the DWDD system, improving track density was a big task. This will be described below in detail. The DWDD system is a system wherein magnetic domains expanded by the displacement of domain walls in the reproduction layer are detected and used for reproduction; hence, it is essential to carry out magnetic shutoff between tracks in order to promote the displacement of the domain walls. As this method, a method of radiating laser light to the space between the recording tracks, raising the temperature and changing the magnetic characteristic of the magnetic layer is available. When this method is used, a groove or a land (inter-groove) is required as a tracking guide so that laser light is radiated to the space between the recording tracks. One of the groove or the land is used as a recording track, and the other is used as a region for carrying out magnetic shutoff between the adjacent recording tracks. In the optical disc recording medium conforming to the DWDD system, wherein the recording tracks are separated by the radiation of laser light as described above, in order to improve the track density by narrowing the distance between the recording tracks, there are the following four tasks.

A first task is generated by a structural limitation wherein the recording track is required to be separated by the groove or inter-groove for separating the recording track. In a prior art optical disc apparatus, a groove is used as a tracking guide during recording and reproduction. This tracking method of using this groove as the tracking guide will be described briefly.

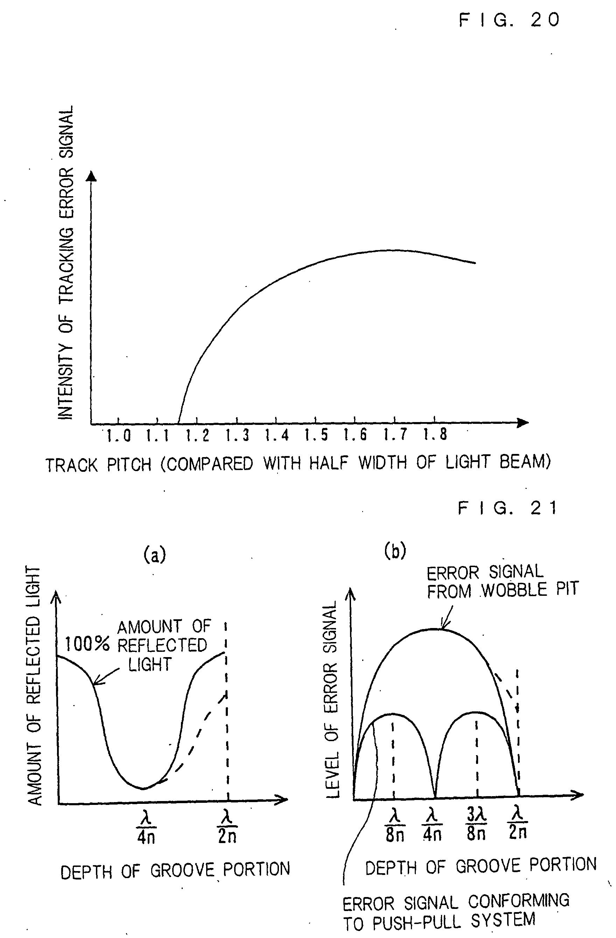

In order to obtain a signal for the tracking guide from the groove, not only the depth of the groove but also the distance between the grooves is required to be in a constant range. The intensity of the tracking error signal decreases abruptly as the distance between the grooves narrows as shown in FIG. 20. The distance between the grooves is required to be about 1.2 times the half width of the light beam for recording and reproduction at the minimum. Even in a DVD-R conforming to a system wherein grooves are used as recording tracks and having attained a high-density track pitch, the distance between the recording tracks (the distance between the grooves) is set at this limit value, 0.74 µm, (the half width of the light beam for the DVD-R is about 0.62 µm). In the case when only the grooves or the inter-grooves are used as recording tracks as described above, the distance between the recording tracks is limited by the distance required for obtaining the tracking guide signal from the grooves; hence, it was very difficult to set the track pitch at a value not more than 1.2 times the half width of the light beam. However, this did not cause a big problem in the prior art optical disc recording medium. In the prior art recording/reproduction system, when the track pitch is narrowed, reproduction is made inoperable by crosstalk from adjacent tracks. This was because the track pitch limited by the crosstalk was nearly equal to the minimum track pitch for obtaining the tracking signal from the grooves.

In particular, in the reproduction system using DWDD, since signals are read by the super resolution operation by domain wall displacement, it is possible to decrease crosstalk from adjacent tracks. This indicates that a DWDD disc has potential to attain an optical disc recording medium having a track density higher than that of the prior art medium. However, in the prior art optical disc recording medium, in order to obtain a tracking guide signal, it was unable to set the tracking pitch at a value not more than 1.2 times the half width of the light beam. If the track pitch is set at a value not more than 1.2 times the half width of the light beam, it is very difficult to carry out tracking along the recording track, thereby generating a first task, a problem to be solved. Not only in a system wherein the recording tracks are separated by laser light but also in a system wherein magnetic separation is carried out between the adjacent recording tracks by using the grooves or the inter-grooves, either the groove or the inter-groove is required to be used as a region for magnetic separation, thereby generating a similar task.

A second task is the occurrence of cross-erasure, that is, when the track density is improved, the distance between the recording tracks decreases, and the adjacent tracks are erased during recording. In order not to cause this cross-write, it is reported that recording in grooves is advantageous (Lecture No. TuA1 at Optical Data Storage Topical Meeting, 2000). However, when grooves less affected by cross-write are used as recording tracks, the inter-grooves cannot be. used as recording tracks. Hence, when an attempt is made to improve the track density to a value not more than 1.2 times the half width of the light beam, no tracking error signal can be obtained, thereby facing a task similar to the first task, and being unable to improve the track density.

A third big task for improving the track density is that the magnetic shutoff region for separating the recording tracks requires a certain width or more. Since the magnetic shutoff region for magnetically separating the recording tracks does not generate a reproduced signal, when the track pitch is constant and the shutoff region is wide, the amplitude of a reproduced signal decreases, resulting in an error. The higher the track density, the more significant the influence of this magnetic shutoff region. Hence, the magnetic shutoff region is required to be as narrow as possible. However, it is very difficult to form this narrow shutoff region. In a method of carrying out magnetic shutoff by using grooves or inter-grooves, the grooves or inter-grooves formed physically have limitations. In addition, if the grooves or inter-grooves formed physically are narrowed, magnetic separation is not carried out sufficiently, thereby generating a task wherein the S/N and f characteristic of the reproduced signal decrease. Furthermore, even in a method of carrying out separation between the recording tracks by the radiation of a laser beam, since the separation width was dependent on the width of the laser beam for carrying out separation, the width was unable to be made sufficiently narrow.

A fourth task relates to the depth of the groove. In order to carry out tracking control by obtaining a tracking guide signal, the depth of the groove has a certain limitation. In order to carry out tracking control by obtaining a tracking signal from a groove, the depth of the groove is required to be in the range of 1/(10 nλ) (n: the refractive index of the substrate, λ: the wavelength of the light) to 1/(6 nλ). However, the depth of the groove for obtaining this tracking signal does not necessarily become an optimal depth for carrying out magnetic separation between the recording tracks conforming to DWDD, whereby it was difficult to effectively use the capability of DWDD to the maximum.

Because of the above-mentioned reasons, a land/groove recording system using both lands (inter-grooves) and grooves as recording tracks is used when improving the track density. Since this system uses both the grooves and the inter-grooves as recording tracks, the distance between the grooves can be doubled when attaining the same recording track pitch, whereby a large tracking error signal can be obtained easily at a narrow track pitch. However, in the land/groove system, there was a difference in the groove's physical structure between the land and the groove, thereby resulting in a big task wherein a difference occurs between the recording/reproduction characteristic of the land and that of the groove.

In addition, in order to obtain magnetic shutoff between adjacent data recording regions in the land/groove system, it is necessary to provide a groove step having a depth of about 120 nm or more. This depth is about λ/(3.5 n) or more in the case of red laser light and about λ/(2.2 n) or more in the case of blue laser light, and is substantially larger than the depth of the grooves in the prior art optical disc recording medium, that is, λ/(8 n) to λ/(6 n). If a groove having an ideal rectangular shape can be formed, by setting the groove portion at a depth of 2 λ/(6 n) to 3λ/(8 n) or 5λ/(8 n) to 4λ/(6 n) or the like, the amount of reflected light and the tracking error signal equivalent in level to those obtained from the prior art groove portion having a depth of λ /(8 n) to λ/(6 n) are supposed to be obtained.

However, in an actual optical disc recording medium, the amount of light obtained from the groove portion having a depth of 2λ/(6 n) to 3λ/(8 n) or 5λ /(8 n) to 4λ/(6 n) or the like (for example, a depth of 160 nm) is very smaller than the amount of light obtained from the prior art groove portion having a depth of λ/(8 n) to λ/(6 n). This is because the amount of reflected light from the groove portion is decreased by the influence of the slant faces (slant faces not having an angle of 90 degrees) at the joint portions between the groove portion and the inter-groove portion as described above. Hence, any reproduced signal having a sufficient S/N (signal-to-noise ratio) was not obtained because of insufficient amount of light from such a deep groove (for example, a groove having a depth of 160 nm). As the groove becomes deeper, this phenomenon becomes far more significant; although the amount of reflected light from the data recording region in the groove portion was about 70% in the case of the groove having a depth of λ/(8 n), the amount reduced to about 40% in the case of the groove having a depth of 3λ/(8 n) (it is assumed that the amount of reflected light from a region with no grooves is 100%). This decrease in the amount of reflected light was a major cause of the lowering of the S/N of the reproduction signal and the like, thereby making the practical use of DWDD difficult.

By forming the shape of the groove portion into a rectangular shape, the reflection of the light beam at the slant faces of the groove portion can be eliminated (the medium can be made closer to an ideal optical disc recording medium). However, in reality, it is difficult to from a groove having a completely rectangular shape in an optical disc substrate. Particularly when forming a deep groove by the injection method, a method generally used to form plastic substrates, it is very difficult to make the angle of the slant face close to 90°. When the angle of the slant face is close to 90°, further problems occur, for example, the optical disc substrate becomes difficult to remove from a stamper, thereby lowering productivity.

### DISCLOSURE OF THE INVENTION

The invention set forth in claim 1 of the present invention is an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, wherein the above-mentioned data recording region is formed of either a groove or an inter-groove, the above-mentioned data recording region is formed of a recording/reproduction film for recording/reproducing recorded information at high density by the displacement of domain walls, the above-mentioned recording/reproduction films disposed in the above-mentioned data recording regions of the above-mentioned tracks adjacent to each other are shut off magnetically by the step of the groove or inter-groove or at portions changed in quality by the processing of a beam for tracking by using the groove or inter-groove formed between the data recording regions of the above-mentioned adjacent tracks as a guide, the region for generating the above-mentioned tracking signal comprises a pair of wobble pits which are shifted left and right from the longitudinal direction of the above-mentioned track and disposed at different positions in the longitudinal direction, and the pitch of the above-mentioned tracks is not more than 1.1 times the half width of a light beam for carrying out recording/reproduction on the data recording regions. "The half width of a light beam" is defined as the diameter of a region wherein the intensity of a light beam is higher than the half value of the peak thereof.

Claim 1 of the present invention is intended to overcome the first, third and fourth tasks among the conventional tasks. First, an action for the first task will be described. In the optical disc recording medium provided with the prior art grooves, since a tracking error signal was obtained from the grooves, the track density was unable to be improved higher than the resolution of the light beam. In the optical disc recording medium in accordance with the present invention, the data recording regions comprise grooves or inter-grooves having a pitch not more than 1.1 times the half width of the light beam, whereby the above-mentioned data recording regions are separated by the grooves or inter-grooves. Hence, magnetic shutoff required for DWDD can be obtained by the physical steps of the grooves or inter-grooves. As a region for generating the tracking signal, a pre-pit region is provided spatially away from the data recording region. Hence, even when the pitch of the data recording regions is not more than 1.1 times the half width of the light beam, the present invention has an action capable of attaining an optical disc recording medium that can carry out reproduction in conformity with the DWDD system while tracking servo is carried out by using the pair of wobble pits disposed in the pre-pit region.

In an optical disc recording medium having groove portions, tracking servo conforming to the push-pull system using the groove portions was carried out conventionally. In a high-density optical disc recording medium conforming to the DWDD system, the track pitch of the adjacent data recording regions is small; hence, in order to attain an optical disc recording medium capable of carrying out tracking servo conforming to the push-pull system by using the diffraction at the groove portions just as in the case of the prior art example, it is necessary to use a light beam, the half width of the intensity of which is very narrow. Therefore, in spite of the DWDD system capable of carrying out reproduction beyond the resolution of the light beam, the track pitch is limited by the tracking detection capability, and the capability of the DWDD system has not been sufficiently utilized.

The third task relates to the width of the magnetic shutoff region for separating the recording tracks. Since the magnetic shutoff region for separating the recording tracks does not generate a reproduced signal, the proportion of the shutoff region in the light beam for carrying out reproduction increases, whereby the amplitude of the reproduced signal decreases, thereby resulting in an error. The higher the track density, the more significant the influence of this magnetic shutoff region. In order to overcome this task, the data recording regions of the optical disc recording medium in accordance with the present invention comprise grooves or inter-grooves. Hence, magnetic shutoff can be attained by the effect of the grooves. However, in order to narrow the width of the magnetic shutoff region, only the shutoff effect of the grooves is insufficient. When the track density is improved, the width of the groove or inter-groove formed between the data recording regions becomes narrow. In this case, the shutoff effect of the groove becomes insufficient, thereby generating a task wherein the linear density cannot be improved to a certain extent or more. In the optical disc recording medium in accordance with the present invention, by carrying out beam tracking by using the groove and the inter-groove formed between the tracks of the data recording regions as a guide, a constant region can be processed accurately by the beam (for example, a region having a constant width can be changed in quality by annealing by using the beam). Hence, the magnetic shutoff effect can be enhanced. The grooves and the inter-grooves formed between the tracks in the data recording regions at this time play a role as a beam-processing guide for carrying out magnetic separation and also plays a role in reducing the processing power of the beam for carrying out magnetic separation by carrying out magnetic separation to some extent by using the steps at the grooves. Hence, the beam processing power for carrying out magnetic separation can be decreased, and magnetic separation can be carrying out at a narrower width. This is an action, for the third task, capable of narrowing the width of the magnetic shutoff region for carrying out the separation of the recording tracks, the third task.

Furthermore, the following action is performed for the fourth task. When carrying out tracking servo conforming to the push-pull system, there is a groove depth best suited for the tracking servo conforming to the push-pull system (FIG. 21); however, the groove depth for magnetically shutting off the adjacent data recording regions from each other is not necessarily the groove depth best suited for tracking servo conforming to the push-pull system. In the present invention, the groove of the data recording region is spatially separated from the region for generating the tracking error signal, whereby the groove depth best suited for the DWDD operation can be set as desired in a considerably wide range.

The invention set forth in claim 2 of the present invention is an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, wherein the above-mentioned track comprises a first track and a second track adjacent to each other, the above-mentioned data recording region of the above-mentioned first track comprises a groove, and the above-mentioned data recording region of the above-mentioned second track comprises an inter-groove, the above-mentioned data recording region is formed of a recording/reproduction film for recording/reproducing recorded information at high density by the displacement of domain walls, the above-mentioned recording/reproduction films disposed in the above-mentioned data recording regions of the above-mentioned tracks adjacent to each other are shut off magnetically by the step of the groove, the region for generating the above-mentioned tracking signal comprises a pair of wobble pits which are shifted left and right from the longitudinal direction of the above-mentioned track and disposed at different positions in the longitudinal direction, the groove depth in the above-mentioned recording region is larger than 3λ/(8 n)(n: the refractive index of the optical disc substrate, λ: the wavelength of reproduction light), and the angle of the slant faces of the above-mentioned wobble pit faces is 80 degrees or less.

Claim 2 of the present invention is intended to overcome the fourth task of the above-mentioned conventional tasks, wherein the depth of the groove for carrying out magnetic shutoff conforming to DWDD cannot be increased in the land/groove recording system and cannot be set as desired. In the optical disc recording medium in accordance with the present invention, even in an optical disc recording medium having data recording regions in which both the grooves and inter-grooves are used, a pre-pit region spatially separated from the data recording region is provided as a region for generating the tracking signal. Hence, the present invention has an action capable of attaining an optical disc recording medium that can carry out reproduction in conformity with the DWDD system while a desired groove depth is set in the data recording region and while tracking servo is carried out by using the pair of wobble pits.

The invention set forth in claim 3 of the present invention is an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, wherein the above-mentioned data recording region is formed of a groove or an inter-groove, the region for generating the above-mentioned tracking signal comprises a pair of wobble pits which are shifted left and right from the longitudinal direction of the above-mentioned track and disposed at different positions in the longitudinal direction, and the pitch of the above-mentioned tracks is not more than 1.1 times the half width of a light beam for carrying out recording/reproduction on the data recording regions.

Claim 3 of the present invention is intended to overcome the second task among the above-mentioned conventional tasks. When the track density is improved, the distance between the recording tracks decreases, whereby the adjacent tracks are erased during recording, thereby causing cross-erasure. In order not to cause this cross-write, recording in grooves is advantageous; however, in the case when the grooves are used as recording tracks, the inter-grooves cannot be used as recording tracks. Hence, when an attempt was made to improve the track density, no tracking error signal was able to be obtained. In the optical disc recording medium in accordance with the present invention, the pre-pit region is provided as a tracking signal generating region, the data recording region is formed of a groove, and both are spatially separated. Hence, even when the track pitch is not more than 1.1 times the half width of the light beam, it is possible to carry out tracking servo by using the pair of wobble pits disposed in the pre-pit region. Hence, an action is obtained wherein a disc capable of carrying out recording at a narrow track pitch can be attained while adopting groove recording being advantageous against cross-write.

Even in the optical disc recording medium (FIG. 18) in accordance with the second prior art example, groove portions and pairs of wobble pits are provided; however, the tracking servo conforming to the push-pull system is the main tracking servo, and only several tens of pairs of wobble pits are provided in one circuit of the optical disc recording medium. Hence, the pairs of wobble pits had an only auxiliary role of correcting the deviation of the tracking servo conforming to the push-pull system. Since the tracking servo conforms to the push-pull system in the second prior art example, the effect of the present invention cannot be obtained. In the present invention, the optical disc recording medium has about 1000 or more pairs of wobble pits in one circuit (1280 pairs in Embodiment 1), and tracking servo can be carried out by using only the one pair of wobble pits.

Claim 4 of the present invention is an optical disc recording medium wherein the tracks disposed spirally or concentrically comprise a first track and a second track being adjacent to each other, one wobble pit disposed on the above-mentioned first track also serves as one of the above-mentioned pair 'of wobble pits disposed on the above-mentioned second track, and one wobble pit disposed on the above-mentioned second track also serves as one of the above-mentioned pair of wobble pits disposed on the above-mentioned first track. If the track pitch is narrowed by improving the track density, the distance between the wobble pits between the tracks is narrowed, and interference occurs, thereby making the tracking error signal small; hence, it is necessary to spatially separate the wobble pits between the adjacent tracks. The optical disc recording medium in accordance with the present invention has an action wherein the track pitch can be narrowed to not more than 1.1 times the half width of the light beam by using one of the wobble pits on one track as one of the wobble pits on the other track adjacent thereto without spatial separation, and the usability of the disc can be raised.

Claim 5 of the present invention is an optical disc recording medium wherein the above-mentioned pre-pit region includes the above-mentioned pair of wobble pits and at least one address pit disposed on the above-mentioned recording track. In the optical disc recording medium in accordance with the present invention, tracking control is made easy by aligning the pre-pit regions in the radial direction of the optical disc recording medium (for example, the invention set forth in claim 8). In particular, seek operation is made very easy by providing the address pit described in Japanese Laid-open Patent Application No. Hei 11-021885.

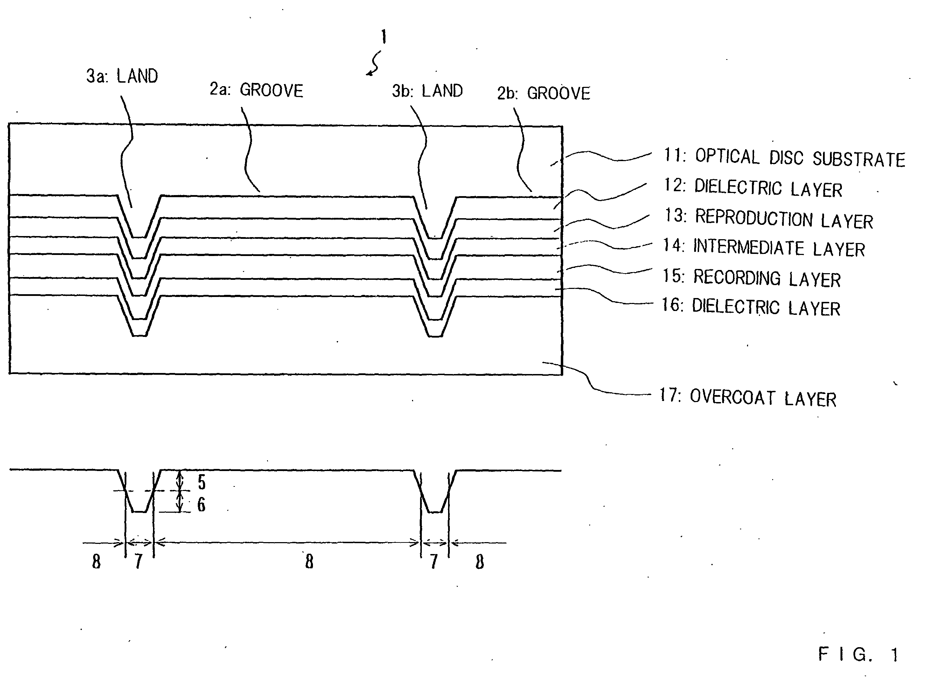

An "optical disc recording medium" is a medium on which information is recorded by optical recording and the concurrent use of optical and magnetic technologies. A "groove" is, among the recessed and projecting portions formed on the optical disc substrate (11 in FIG. 1) of the optical disc recording medium, a portion close to the optical disc substrate, and an "inter-groove" is, among the recessed and projecting portions formed on the optical disc substrate (11 in FIG. 1) of the optical disc recording medium, a portion away from the optical disc substrate. A "structure magnetically shut off mutually" is a structure wherein the reproduction layer, the recording layer and the intermediate layer of the recording film are magnetically shut off mutually therebetween. The structure of the recording film may have a desired structure. For example, the recording film of an embodiment has a recording layer, an intermediate layer and a reproduction layer; in another embodiment, the recording film has a recording layer, an intermediate layer, a control layer and a reproduction layer.

A "segment" comprises one data recording region and one pre-pit region. A "wobble pit" is a generic name of a pit disposed so as to be shifted from the longitudinal center line of the track. A "pre-pit region" is a region having at least a pair of wobble pits. The pre-pit region preferably includes one address pit (not all the pre-pit regions may include an address pit). A "pit" is a physically projecting or recessed portion provided on an optical disc recording medium for specific purposes, such as sample servo or an address. Typically, the pit is a hole having the cross-sectional shape of a circle, ellipse, rectangle, etc.

The invention set forth in claim 6 of the present invention is an optical disc recording medium wherein the bottom face of the above-mentioned pit and the bottom face of the above-mentioned groove portion are on nearly the same plane, and the height of the upper face of the above-mentioned inter-groove portion, measured from the bottom face of the above-mentioned groove portion, is smaller than the height of the upper face of the above-mentioned pre-pit region. With this configuration, the depth of the pre-pit region can be increased, whereby pit signals, such as the tracking error signal and address signal, can be made large.

"The bottom face of a pit" is the lowest place of a given pit (for example, a wobble pit or an address pit). For example, if the pit has the shape of a cylinder, the bottom face is the bottom face of the cylinder, and if the pit has the shape of an inverted cone, the bottom face is the apex of the cone. Hence, the bottom face includes the case wherein the area of the bottom face is very small. In this embodiment, the portion closest to the optical disc substrate (for example, 11 in FIG. 1) is referred to as the bottom face or the like, and the portion farthest from the optical disc substrate is referred to as the upper face, apex or the like. "Height" is the distance measured from a reference point, i.e., a portion close to the optical disc substrate, to a portion away from the optical disc substrate (the distance measured in a direction perpendicular to the flat face of the optical disc recording medium). "Depth" is the distance measured from the reference point, i.e., the portion away from the optical disc substrate, to the portion close to the optical disc substrate (the distance measured in a direction perpendicular to the flat face of the optical disc recording medium). The present invention has an action wherein adjacent data recording regions are magnetically shut off mutually, thereby being capable of attaining an optical disc recording medium that can obtain a reproduced signal and a sampling servo signal, both having sufficiently high reproduction levels.

In the step of radiating a laser beam to an original master in an original master production method, the thicknesses of a resist applied to the original master made of glass are set at the depths of the pit and the groove portion, and the resist in the pit and the groove portion is cut to the surface of the original master made of glass in the direction of the depth by the laser beam. This method is done far more easily than, for example, the method of leaving a resist having a constant thickness in the groove portion by adjusting the intensity of the laser beam (a resist having a constant thickness is left on the original master made of glass); with this method, roughness and the like do not occur on the surface.

The invention set forth in claim 7 of the present invention is an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, wherein the above-mentioned data recording region is formed of a groove or an inter-groove, or a groove and an inter-groove, and the length of the above-mentioned pre-pit region is constant in the optical disc recording medium or constant in a zone divided in the radial direction.

Conventionally, when the position of a wobble pit in an optical disc recording medium (it is assumed that the number of pre-pit regions provided on one circuit of a track is constant) was detected for example, the distance (or time) between the start pits (or the wobble pits) provided in respective pre-pit regions was measured. On the basis of the positions of the detected start pits (or wobble pits) and the distance (or time) between the start pits, it was judged that an wobble pit (or another wobble pit) was present at a point (or window) delayed from the position of the start pit (or wobble pit) by the distance (or time) obtained by multiplying the distance (or time) between the start pits by a constant value.

More specifically, for example, the recording/reproduction apparatus for the prior art optical disc recording medium has a VCO, the frequency division signal of the VCO is compared with the start pit in terms of phase, and an error signal is fed back to the VCO, thereby controlling the VCO. The window signal of the wobble pit delayed from the position of the start pit was generated by counting the output signal of the VCO. In other words, in the prior art optical disc recording medium, it was necessary to maintain a proportional relationship between the distance between the pre-pit regions and the distance between the respective pits in the range from the inner circumference to the outer circumference of the prior art optical disc recording medium. Hence, the length of the pre-pit region was larger at a position closer to the outer circumference (for example, when the pre-pit regions are aligned in the radial direction, they form a sector).

In the present invention, the length of the pre-pit region is nearly constant inside the optical disc recording medium or inside the zone obtained by dividing the disc in the radial direction. In the optical disc recording medium in accordance with the present invention, the leading end and the trailing end, that is, the boundaries between the groove portion or the inter-groove portion and the pre-pit region, can be detected. For example, if the length of the pre-pit region of the optical disc recording medium is constant, the distance (or time) between the adjacent leading and trailing ends changes as the position of the pre-pit region is moved from the inner circumference to the outer circumference; however, the distance between the above-mentioned leading and trailing ends of the pre-pit region is constant. Hence, on the basis of the distance between the leading and trailing ends of the pre-pit region, by generating a point (or window) delayed from the leading end of the pre-pit region by the distance obtained by multiplying the distance between the above-mentioned leading and trailing ends by a constant value, the accurate level of the wobble pit can be measured by using the point (or window).

By the method described above, address detection, tracking control, etc. can be carried out for the optical disc recording medium in accordance with the present invention, wherein the lengths of the pre-pit regions located at different radial positions are nearly constant. For example, when it is assumed that the lengths of the pre-pit regions from the inner circumference to the outer circumference are constant (for example, when the pre-pit regions are aligned in the radial direction, they form a rectangle), in comparison with the prior art optical disc recording medium wherein the pre-pits are disposed radially, in an optical disc recording medium having a diameter of about 50 mm, it was thus possible to attain an optical disc recording medium having the length of the data recording region 3% larger. The present invention has an action capable of attaining an optical disc recording medium that can record information in higher density.

"The length of the pre-pit region" is the distance measured in the longitudinal direction of the track. In other words, it is the distance measured along the spiral (or concentric) track. "The zone divided in the radial direction" is a zone divided on the basis of the value of the radius. For example, division is carried out into three zones, that is, a zone having a radius r1 or less, a zone having a radius of r1 to r2 and a zone having a radius of r2 or more.

The invention set forth in claim 8 of the present invention is an optical disc recording medium wherein either one end of the groove portion constituting the data recording region is aligned in the radial direction. With this configuration, by detecting one end of the above-mentioned groove portion or inter-groove portion, a clock for recording data on the optical disc recording medium can be generated accurately. Even during seek time, the PLL for the clock does not deviate greatly, whereby address pits and the like are apt to be detected easily.

The invention set forth in claim 9 of the present invention is an optical disc recording medium wherein one of the pair of wobble pits constituting the pre-pit region is aligned in the radial direction. With this configuration, by detecting one of the pair of wobble pits, a clock for recording data on the optical disc recording medium can be generated accurately.

The invention set forth in claim 10 of the present invention is an optical disc recording medium wherein the tracks disposed spirally or concentrically comprise a first track and a second track being adjacent to each other, one wobble pit disposed on the above-mentioned first track also serves as one of the above-mentioned pair of wobble pits disposed on the above-mentioned second track, and one wobble pit disposed on the above-mentioned second track also serves as one of the above-mentioned pair of wobble pits disposed on the above-mentioned first track. If the track pitch is narrowed by improving the track density, the distance between the wobble pits between the tracks is narrowed, and interference occurs, thereby making the tracking error signal small; hence, it is necessary to spatially separate the wobble pits between the adjacent tracks. The optical disc recording medium in accordance with the present invention has an action wherein the track pitch can be narrowed to not more than 1.1 times the half width of the light beam by using one of the wobble pits on one track as one of the wobble pits on the other track adjacent thereto without spatial separation, and the usability of the disc can be raised.

The invention set forth in claim 15 of the present invention is an optical disc recording medium wherein the center of the track obtained on the basis of the above-mentioned pair of wobble pits is deviated from the center line of the above-mentioned groove portion or inter-groove portion for forming the above-mentioned data recording region. With this configuration, the center of the track from the viewpoint of magnetic shutoff can be aligned with the center of the track from the optical viewpoint, whereby it is possible to attain a disc having a wide margin.

The invention set forth in claim 16 of the present invention is an optical disc apparatus for carrying out reproduction on an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, and the above-mentioned data recording region having a region formed of a groove or an inter-groove, or a groove and an inter-groove, wherein at least one of the leading and trailing ends of the groove portion or the inter-groove portion or both the groove portion and the inter-groove portion constituting the above-mentioned data recording region is detected, and the presence/absence of a pit in the above-mentioned pre-pit region or the reproduction level of the pit is detected on the basis of the detected positional information.

In the optical disc recording medium in accordance with the present invention having the groove portions (or the inter-groove portions, or the groove portions and the inter-groove portions) and the pit regions, the boundary between the groove portions (or the inter-groove portions, or the groove portions and the inter-groove portions) and the pit regions is first detected by using the change in the amount of reflected laser light radiated to the boundary between the groove portions (or the inter-groove portions, or the groove portions and the inter-groove portions) and the pit regions. Next, the output timing of the pit in the pit region is detected on the basis of the timing of the boundary, and the presence/absence of a pit or the reproduction level of the pit is detected. The present invention has an action capable of attaining an optical disc apparatus that can easily detect the output level of the pit. With the present invention, no start pit is required. By detecting both the leading end and the trailing end of the pre-pit region, the length of the pre-pit region can be made constant, regardless of the distance (radius) between the position of the pre-pit region and the center of the optical disc recording medium. The present invention has an action capable of'attaining an optical disc recording medium having a high recording density. An "optical disc apparatus" is an apparatus for recording or reproducing data on an optical disc (the reproduction levels of the pits are detected even during recording).

Typically, at least one of the leading end and the trailing end of the groove portion (or the inter-groove portion or the groove portion and the inter-groove portion) is detected, and a detection pulse for specifying a point delayed by a constant amount from the detection timing of the leading end or the trailing end is generated, or a window pulse wherein a point delayed by a constant amount from the detection timing of the leading end or the trailing end is used as a start point, and a point further delayed by a constant amount is used as an end point (a period of a constant length from the above-mentioned start point is specified) is generated. Next, the amount of reflected light of a laser beam at the point specified by the above-mentioned detection pulse or the amount (a given value in the above-mentioned period, for example, the minimum value, maximum value, average value, integrated value, etc.) of reflected light of the laser beam in the period specified by the above-mentioned window pulse is detected. The method of detecting only the leading end of the pre-pit region can be attained by replacing the start pit of the above-mentioned prior art example with the leading end of the pre-pit region. A method of detecting both the leading end and the trailing end of the pre-pit region will be described in an embodiment.

On the basis of the amount of the detected reflected light, the presence/absence of a pit or the reproduction level of the pit is detected. The measurement of a constant amount of delay is carried out by measuring of time (for example, the charge/discharge time or the like of an analog circuit) or by counting the number of reference clock pulses (the reference clock is a clock having a constant frequency or a clock having a variable frequency). Typically, detection pulses or window pulses as many as pits that might be present in the pre-pit region (for example, the number of address pits might differ depending on the pre-pit region) are generated.

Although a desired method is used as the method of detecting the leading end and the trailing end, two pulse edges having a constant time interval (the length of the groove portion, the inter-groove portion or the pre-pit region) therebetween or having a time interval of not less than the constant value therebetween are judged as the leading end and the trailing end, for example. Regardless of whether a data recording region is present in a groove portion or an inter-groove portion (groove portions are present on both sides thereof), the diffraction phenomenon of the light changes at the leading end and the trailing end of the groove portion or the inter-groove portion; hence, the leading end and the trailing end can be detected.

The invention set forth in claim 17 of the present invention is an optical disc apparatus for carrying out reproduction on an optical disc recording medium comprising tracks disposed spirally or concentrically, the above-mentioned track having segments divided into a plurality of regions, the above-mentioned segment having a pre-pit region provided with a region for generating a tracking signal for tracking the above-mentioned track, and a data recording region for recording data, the above-mentione'd data recording region being formed of a groove or an inter-groove, or a groove and an inter-groove, and the length of the above-mentioned pre-pit region being constant in the optical disc recording medium or constant in a zone divided in the radial direction, wherein both the leading end and the trailing end of the groove or the inter-groove or the groove and the inter-groove constituting the above-mentioned data recording region is detected, and the presence/absence of a pit in the above-mentioned pre-pit region or the reproduction level of the pit is detected on the basis of the detected positional information.

In the optical disc apparatus in accordance with the present invention, the leading end and the trailing end, that is, the boundaries between the groove portion or the inter-groove portion and the pre-pit region of the optical disc recording medium, can be detected. For example, if the length of the pre-pit region of the optical disc recording medium is nearly constant, on the basis of the distance between the leading and trailing ends of the pre-pit region, by generating a point (or window) delayed from the leading end of the pre-pit region by the distance obtained by multiplying the distance between the above-mentioned leading and trailing ends by a constant value, the accurate level of the wobble pit can be measured by using the point (or window). The present invention has an action capable of attaining an optical disc apparatus that can carry out reproduction on an optical disc recording medium having a high recording density, wherein the length of the pre-pit region is constant inside the optical disc recording medium or inside the zone obtained by dividing the optical disc recording medium in the radial direction.

The invention set forth in claim 18 of the present invention is a method of producing an original master for an optical disc recording medium, having a step for radiating a laser beam to a resist on an original master, wherein the height of the resist for forming an inter-groove portion, measured from the surface of the original master, is made lower than the height of the resist before the radiation of the laser beam by mutually interfering laser beams for forming adjacent groove portions.

In the present invention, by mutually interfering laser beams for forming adjacent groove portions, an inter-groove portion having a smaller height is formed. Hence, the width of the inter-groove portion can be made narrow. In addition, it is possible to accurately form a relatively deep pit (the bottom of the pit is at a deep position measured from the upper face of the pit region) and a relatively shallow groove bottom face (the bottom of the groove portion is at a shallow position measured from the apex of the low inter-groove portion) (there is no surface roughness or the like).

By particularly producing an optical disc recording medium provided with groove portions serving as data recording regions from an original master produced by the original master production method in accordance with the present invention, the width of the recording track (the width of the groove portions) can be made larger at a constant track pitch, whereby the present invention has an action that can attain a method of producing an original master for an optical disc recording medium capable of obtaining a high reproduction output level at a constant track pitch owing to the small depth of the groove portions. Furthermore, the inventors of the present invention have found that the small inter-groove portions formed as described above magnetically shut off the adjacent data recording regions (groove portions) mutually. Hence, by producing an optical disc recording medium that particularly uses groove portions as data recording regions from an original master produced by the original master production method in accordance with the present invention, the present invention has an action capable of attaining a method of producing an optical disc recording medium suited for reproduction conforming to the DWDD system. Moreover, a deep pit (preferably 3 λ/(8 n) or more in depth) is formed while the relative depth of the groove portion is made shallow. Hence, it is possible to obtain an output signal for stable sample servo.

"Interfering" has the following meaning. The overlap portion of the space through which the laser beam for cutting a first groove portion passes and the space occupied by a resist is referred to as a first space (the resist on the first space is cut). The overlap portion of the space through which the laser beam for cutting a groove portion adjacent to the first groove portion passes and the space occupied by the resist is referred to as a second space (the resist on the second space is cut). The fact that there is an overlap portion between the first space and the second space is referred to as "there is interference." Hence, "interfering" refers to partially overlapping the first space and the second space with each other.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG. 1 is a sectional view showing the configuration of an optical disc recording medium in accordance with an embodiment;

FIG. 2 is a perspective sectional view showing the optical disc recording medium in accordance with the embodiment;

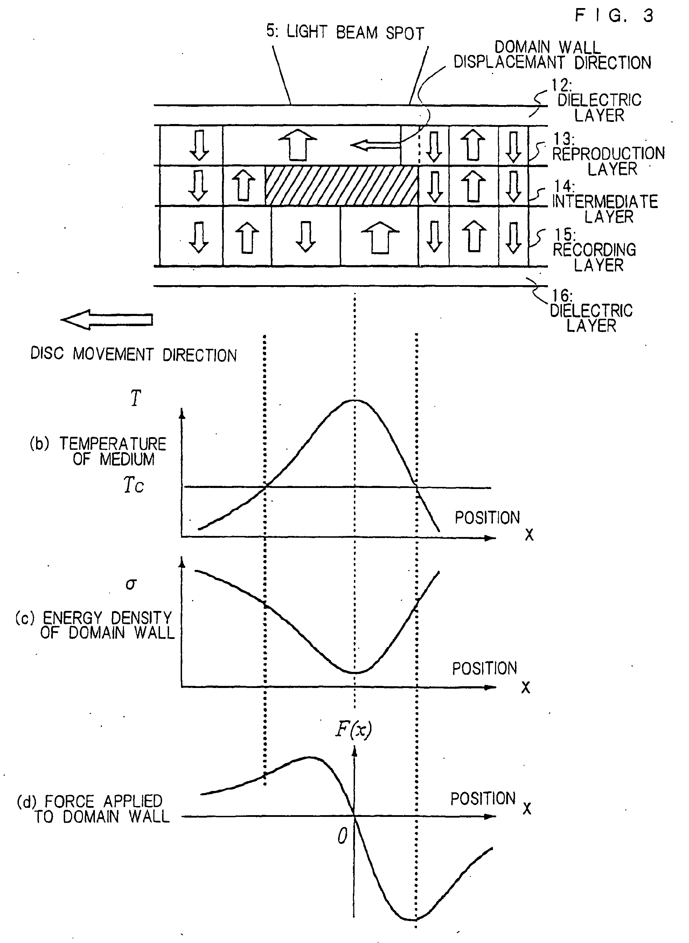

FIG. 3 is a sectional view showing the optical disc recording medium in accordance with the embodiment, explaining the reproduction operation of the optical disc recording medium; the portion (a) of FIG. 3 is a sectional view showing the configuration (magnetization direction in particular) of the recording film of the optical disc recording medium; the portion (b) of FIG. 3 is a characteristic graph showing temperature distribution inside the optical disc recording medium depending on the position on the optical disc recording medium during reproduction; the portion (c) of FIG. 3 is a characteristic graph showing the domain wall energy of the reproduction layer, and the portion (d) of FIG. 3 is a characteristic graph showing a force for displacing the domain walls of the reproduction layer;

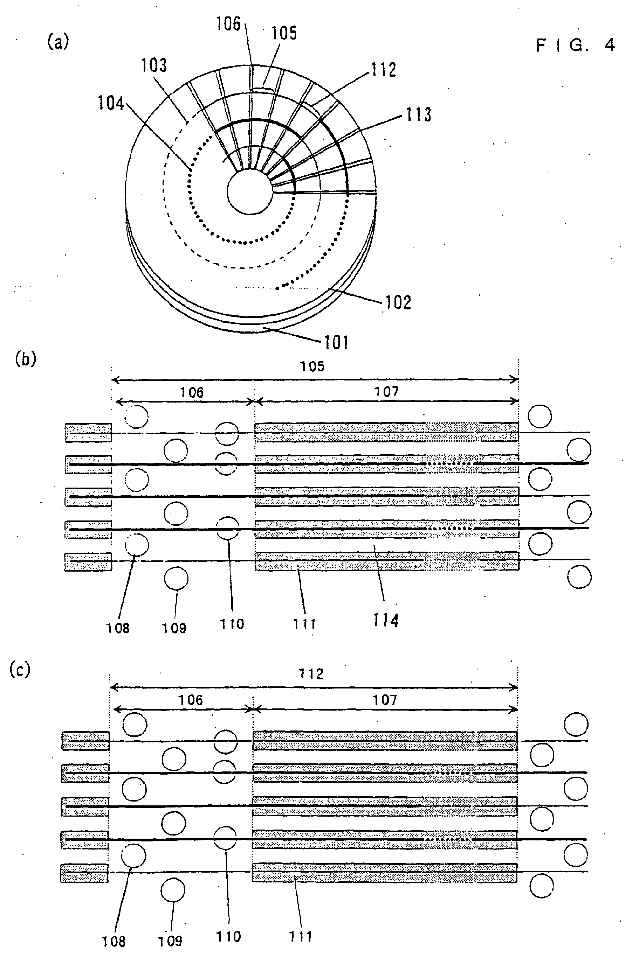

The portion (a) of FIG. 4 is a view showing the overall configuration of an optical disc recording medium in accordance with Embodiment 1; the portion (b) of FIG. 4 is a magnified view showing the pre-pit region and the like thereof; and the portion (c) of FIG. 4 is a magnified view showing the pre-pit region at the joint portion of the track thereof;

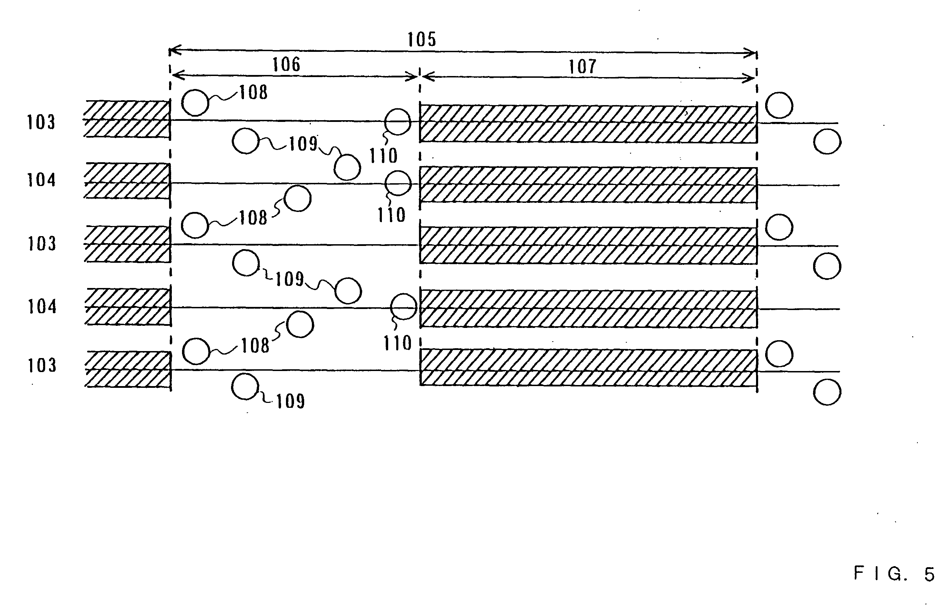

FIG. 5 is a magnified view showing the pre-pit region and the like of an optical disc recording medium in accordance with another embodiment;

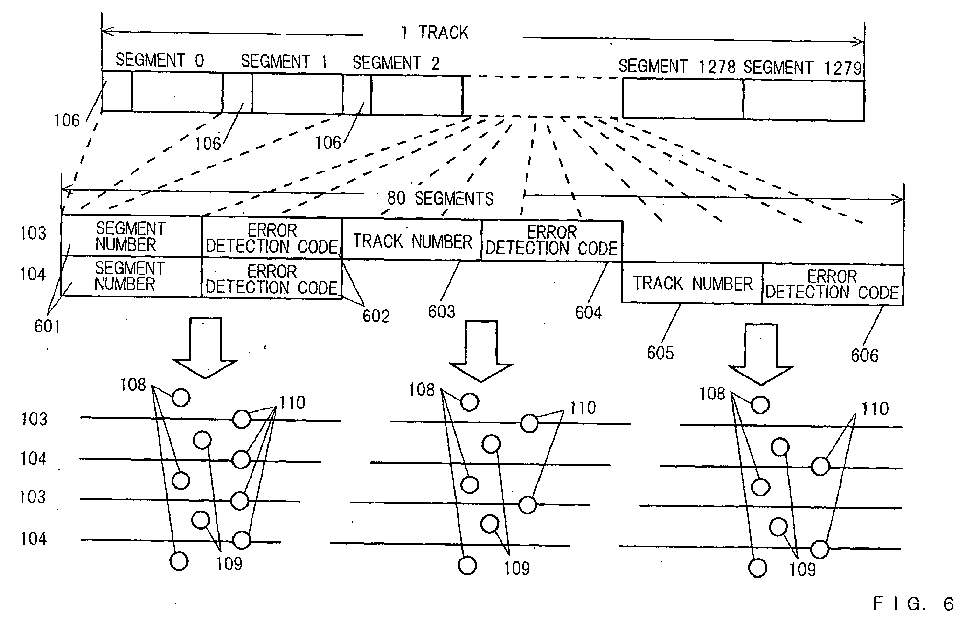

FIG. 6 is a schematic view showing the format configuration of the pit region in accordance with the embodiment;

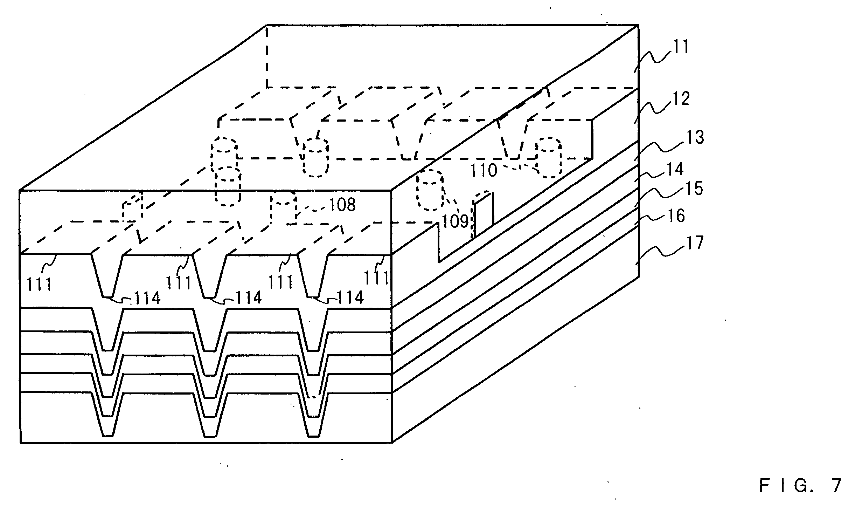

FIG. 7 is a perspective sectional view showing the pre-pit region and the like in accordance with Embodiment 1;

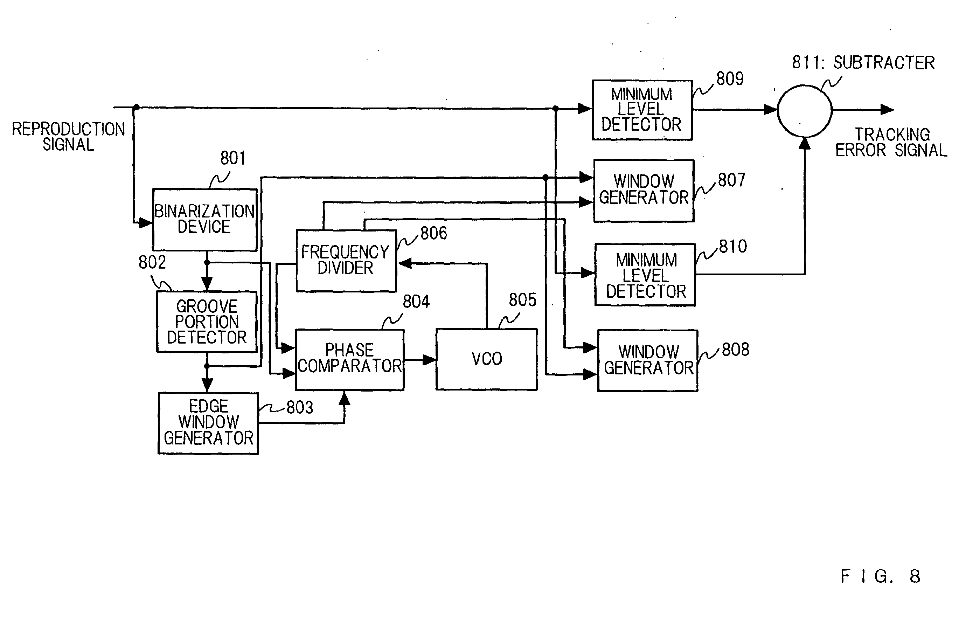

FIG. 8 is a view showing a schematic configuration of a tracking error signal detection portion in the optical disc apparatus in accordance with Embodiment 1;

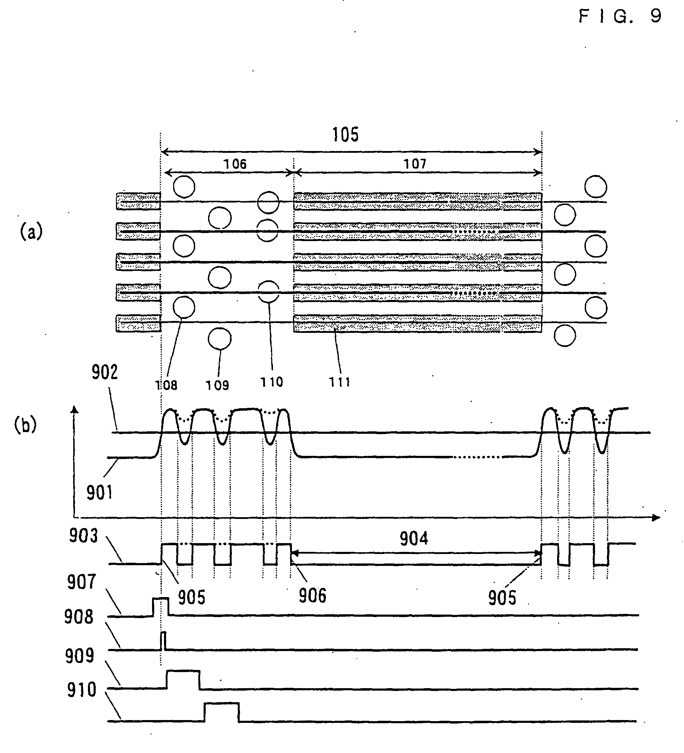

The portion (a) of FIG. 9 is a magnified view showing the pre-pit region and the like of the optical disc recording medium in accordance with Embodiment 1; and the portion (b) of FIG. 9 is a view showing the output signals of the respective portions thereof;

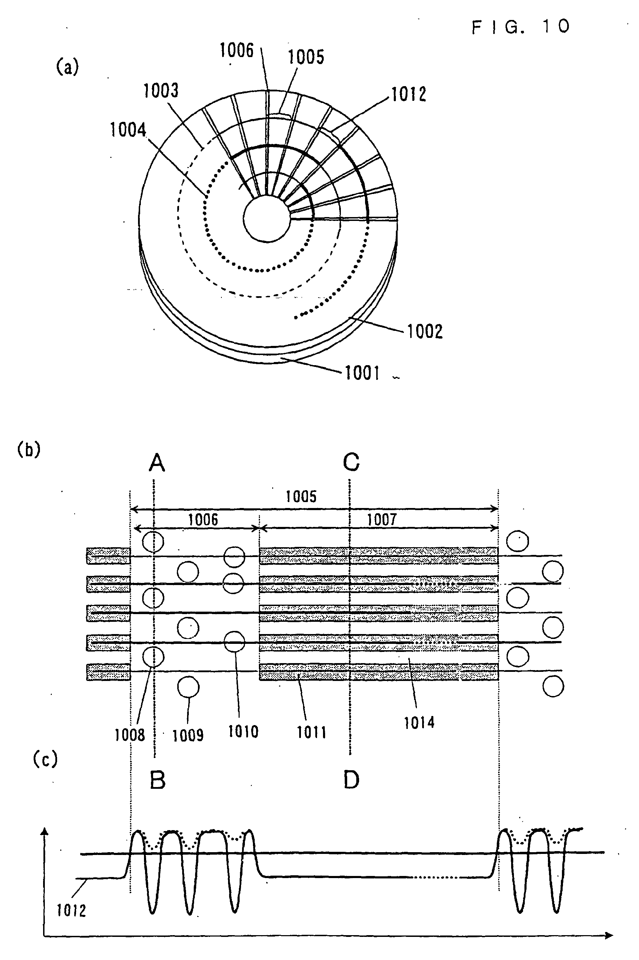

The portion (a) of FIG. 10 is a view showing the overall configuration of an optical disc recording medium in accordance with Embodiment 2; the portion (b) of FIG. 4 is a magnified view showing the pre-pit region and the like thereof; and the portion (c) of FIG. 4 is a view showing the output signals of the respective portions thereof;

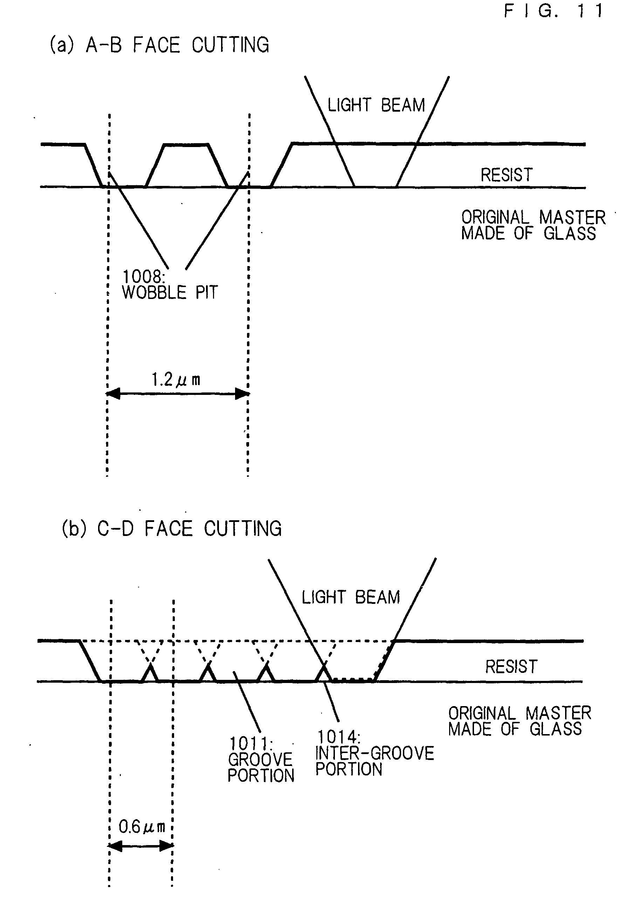

The portion (a) of FIG. 11 is a view showing a method of forming wobble pits of an original master for the optical disc recording medium in accordance with the embodiment; and the portion (b) of FIG. 11 is a view showing a method of forming the groove portions thereof;

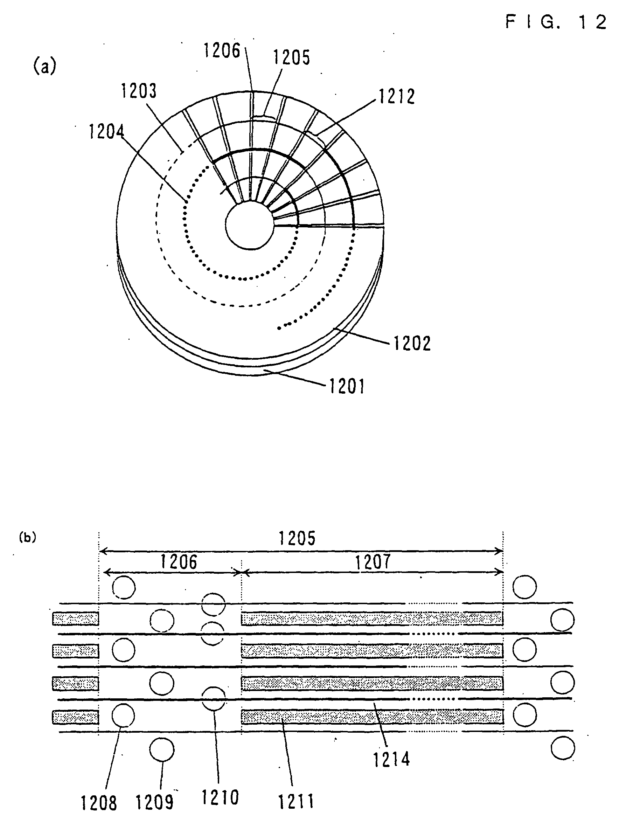

The portion (a) of FIG. 12 is a view showing an overall configuration of an optical disc recording medium in accordance with Embodiment 3; and the portion (b) of FIG. 12 is a magnified view showing the pre-pit region and the like thereof;

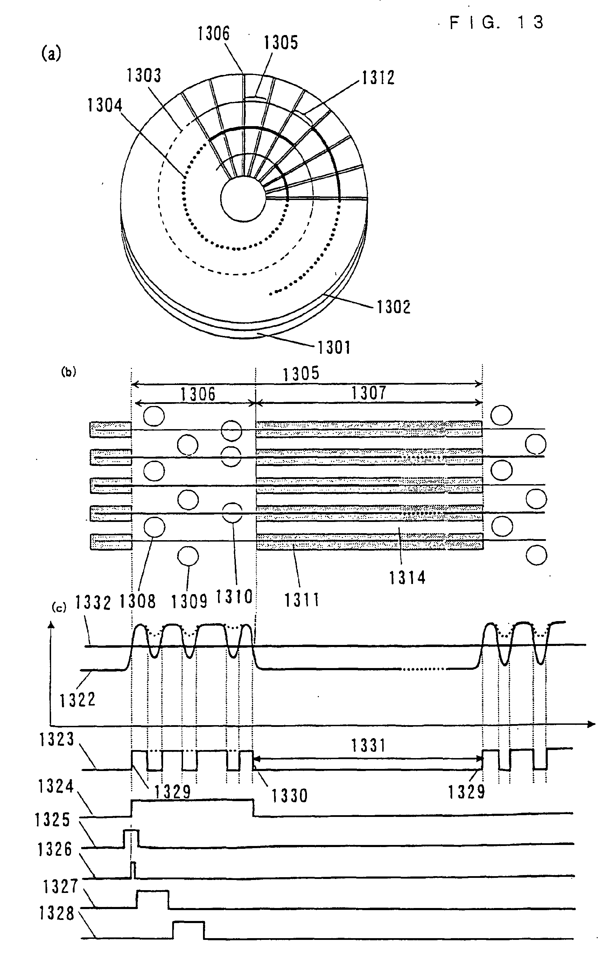

The portion (a) of FIG. 13 is a view showing an overall configuration of an optical disc recording medium in accordance with Embodiment 4; the portion (b) of FIG. 12 is a magnified view showing the pre-pit region and the like thereof; and the portion (c) of FIG. 13 is a view showing the waveforms of the respective portions thereof;

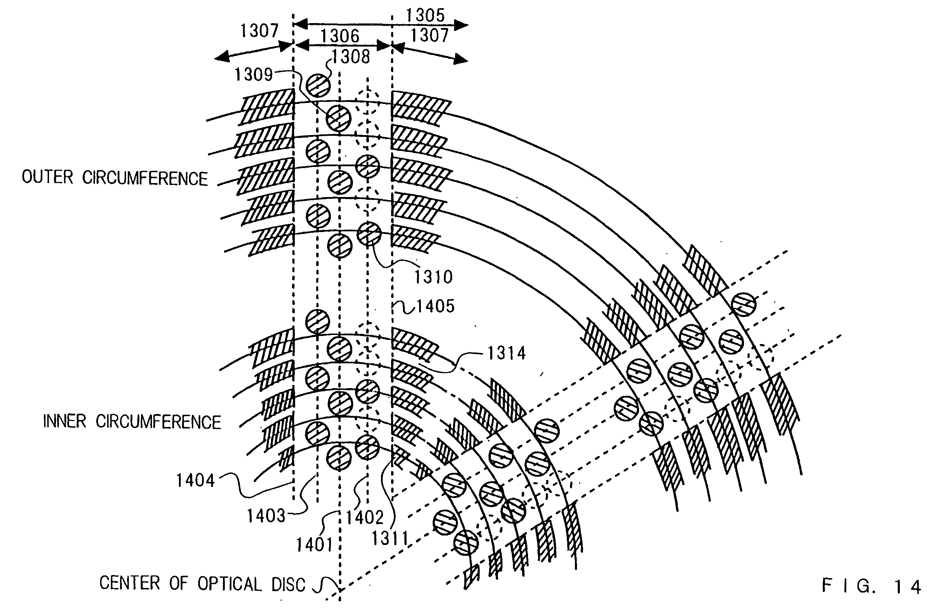

FIG. 14 is a magnified view of the pre-pit regions and the like at the outer and inner circumferences of the disc in the same zone of the optical disc recording medium in accordance with Embodiment 4;

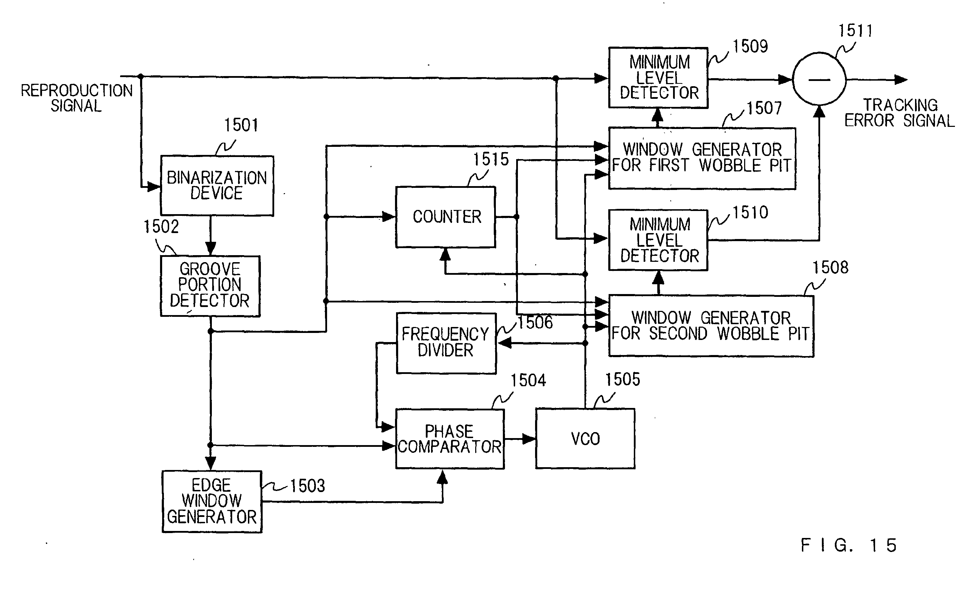

FIG. 15 is a schematic view showing a configuration of the tracking error signal detection portion of the optical disc apparatus in accordance with Embodiment 4.

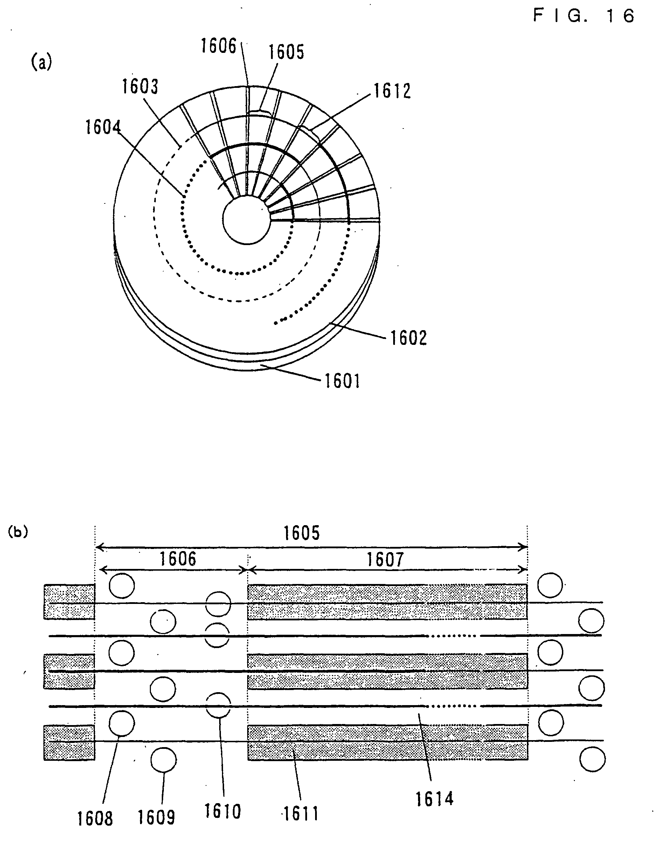

The portion (a) of FIG. 16 is a view showing an overall configuration of an optical disc recording medium in accordance with Embodiment 5; and the portion (b) of FIG. 16 is a magnified view showing the pre-pit region and the like thereof;

FIG. 17 is a view showing a configuration of the prior art optical disc recording medium using the sample servo system;

FIG. 18 is a view showing a configuration of the prior art optical disc recording medium using the combination of the push-pull system and the sample servo system;

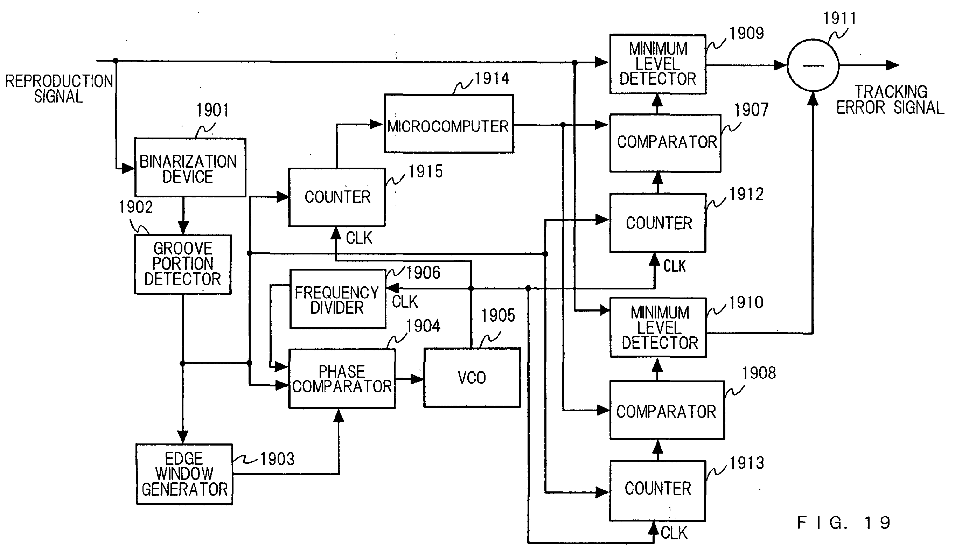

FIG. 19 is a schematic view showing a configuration of the tracking error signal detection portion of an optical disc apparatus in accordance with another embodiment;

FIG. 20 is a graph showing the relationship between the intensity of the tracking error signal and the track pitch; and

The portion (a) of FIG. 21 is a view showing the relationship between the depth of the groove portion and the amount of reflected light, and the portion (b) of FIG. 21 is a view showing the relationship between an error signal in the push-pull system and an error signal from wobble pits.

It will be recognized that some or all of the drawings are schematic representations for purposes of illustration and do not necessarily depict the actual relative sizes or locations of the elements shown.

### BEST MODE FOR CARRYING OUT THE INVENTION

Embodiments specifically indicating the best modes for embodying the present invention will be described below together with drawings. However, the present invention is not limited to the following embodiments, provided that the spirit of the invention is observed.

### [Embodiment 1]

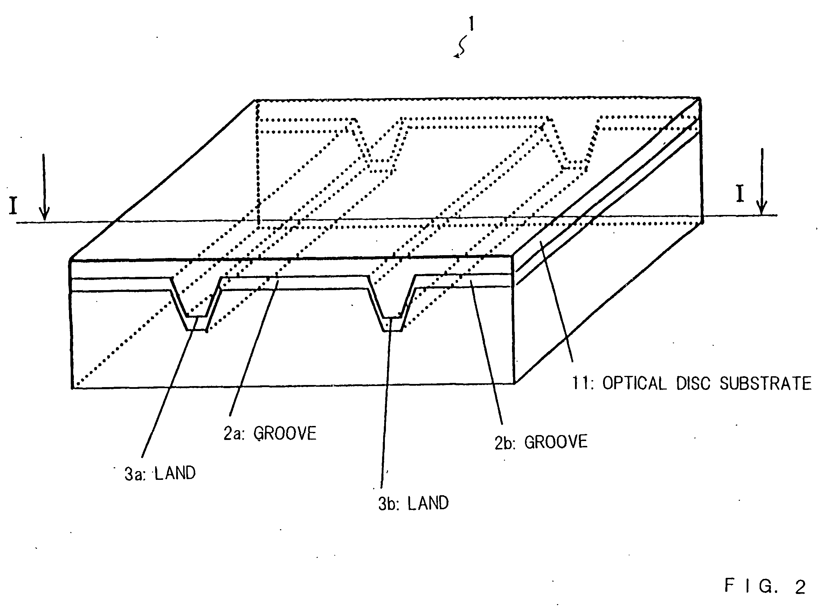

Embodiments in accordance with the present invention will be described below in detail referring to the drawings. First, FIG. 1 is a sectional view showing the structure of an optical disc recording medium in accordance with Embodiment 1 of the present invention, and FIG. 2 is a perspective view showing the structure of the optical disc recording medium in accordance with Embodiment 1 of the present invention.

FIG. 1 is a radially sectional view of the data recording region of the optical disc recording medium having the shape of a disc. The data recording region has groove portions 2a and 2b extending so as to be adjacent to each other perpendicularly to the paper face of FIG. 1, and the above-mentioned data recording region extends helically from the inner circumference to the outer circumference of the optical disc recording medium. FIG. 1 is a sectional view taken on the section I-I of FIG. 2. As shown in FIG. 2, the side close to the optical disc substrate 11 is assumed to be the lower side in the descriptions of the present specification and claims. Hence, the groove portions 2a and 2b are referred to as groove portions, since they are close to the optical disc substrate 11.

In FIG. 1, numeral 11 designates a transparent optical disc substrate made of polycarbonate, and numeral 12 designates a dielectric layer for protecting a recording film and for adjusting the optical characteristics of the medium. A reproduction layer 13 for detecting information by using the displacement of domain walls, an intermediate layer 14 for controlling the exchange coupling between the reproduction layer and a recording layer, and the recording layer 15 for holding information constitute a laminated recording film. Furthermore, numeral 16 designates a dielectric layer for protecting the recording film, and numeral 17 designates an overcoat layer.

In FIG. 1, a "track pitch" is referred to as the distance between the centers of the data recording regions adjacent to each other. In FIG. 1, (length 7 + length 8) is equal to the length of the track pitch. In FIG. 1, (height 5 + height 6) is the difference in height between the apexes (the bottom portions of the inverse trapezoids in FIG. 1) of the land portions 3a and 3b and the bottom faces of the groove portions 2a and 2b, and the height 5 is equal to the height 6. The point where the height 5 makes contact with the height 6 is referred to as a mesial point. The length 7 measured with reference to the mesial point is the width of the land portions 3a and 3b; in a similar way, the length 8 measured with reference to the mesial point is the width of the groove portions 2a and 2b. In the descriptions of the present specification and claims, "the width of the land portion" and "the width of the groove portion" are measured by the above-mentioned measurement method.

Next, the configuration of the optical disc recording medium in accordance with Embodiment 1 will be described. As shown in FIG. 1, the optical disc recording medium in accordance with Embodiment 1 has recording and reproduction films laminated in multilayers including the above-mentioned magnetic film. In the optical disc substrate 11, the land portions 3a and 3b are formed on both sides of the groove portion 2a, and the depth h of the groove portions 2a and 2b is 60 nm from the upper faces of the land portions 3a and 3b. The groove portions 2a and 2b are made independent of each other by the land portions. In addition, the track pitch of the optical disc recording medium 1 in accordance with Embodiment 1 is 0.54 µm, and the width of the groove portions is 0.4 µm.

Referring to FIG. 1 and FIG. 2, a method of producing the optical disc recording medium in accordance with Embodiment 1 will be described. First, the transparent optical disc substrate 11 made of polycarbonate and having the groove portions, the land portions and pre-pits such as address pits is formed by the injection method. Next, a B-doped Si target is set in a DC magnetron sputtering system; after the above-mentioned optical disc substrate 11 is secured to a substrate holder, the interior of a chamber is subjected to vacuum exhaustion by a cryo pump until a high vacuum of 1 × 10⁻⁵ Pa or less is obtained. Ar gas and N₂ gas are introduced into the chamber until 0.3 Pa is obtained while vacuum exhaustion is maintained, and a SiN layer having a thickness of 80 nm is formed as the dielectric layer 12 by reactive sputtering while the substrate is rotated.

Then, while vacuum exhaustion is maintained in the same way, Ar gas is introduced into the chamber until 0.4 Pa is obtained; while the substrate is rotated, the reproduction layer 13 made of GdFeCoCr by using respective targets Gd, Fe, Co and Cr and having a thickness of 30 nm, the intermediate layer 14 made of TbDyFe by using respective targets Tb, Dy and Fe and having a thickness of 10 nm, and a recording layer 15 made of TbFeCo by using respective targets Tb, Fe and Co and having a thickness of 50 nm are formed sequentially on the dielectric layer 12 by the DC magnetron sputtering method. The film composition of each layer can be matched to a desired film composition by adjusting the supply power ratio of the respective targets.

Next, the B-doped Si target is set, and Ar gas and N₂ gas are introduced into the chamber until 0.3 Pa is obtained; while the substrate is rotated, the second dielectric layer 16 made of SiN and having a thickness of 80 nm is formed by the reactive sputtering method. Next, the overcoat layer 17 made of an epoxy acrylate resin is dropped to the dielectric layer 16 and applied by spin coating so as to have a thickness of 6 µm, and the above-mentioned overcoat layer 17 is cured by radiating the light of an ultraviolet lamp. The reproduction layer 13 made of GdFeCoCr has a compensation composition temperature of 150°C and a Curie temperature of 270°C; the intermediate layer 14 made of TbDyFe has a Curie temperature of 150°C; at the Curie temperature or less, rare earth metal compositions are predominant at all times. Furthermore, the recording layer 15 made of TbFeCo has a compensation composition temperature of 80°C and the composition thereof is adjusted by setting the supply power of each target so that a Curie temperature of 290°C is obtained.

The above-mentioned film configuration becomes a basic structure of the recording and reproduction films conforming to the DWDD (Domain Wall Displacement Detection) system. In this system, the domain walls approaching a light beam for reproduction are displaced sequentially, and the information on the reproduction layer's magnetic domains magnified by this displacement of the domain walls are detected. Hence, it is possible to attain high-density recording and reproduction exceeding the detection limit determined by the wavelength of reproduced light and the numerical aperture of an objective lens. In order to attain reproduction conforming to the DWDD system, it is necessary to carry out magnetic separation between the adjacent recording tracks. This separation method will be described in detail in the explanation of the track structure described later.

In order to explain the necessity of the magnetic separation between the recording tracks required for the DWDD system, the principle of reproduction conforming to the above-mentioned DWDD system will be explained below in more detail referring to FIG. 3. The portion (a) of FIG. 3 is a view showing the cross-section of the recording film of a rotating disc. On the substrate (not shown) and the dielectric layer 12, a recording film comprising three layers, i.e., the reproduction layer 13, the intermediate later 14 and the recording layer 15, is formed, and the dielectric layer 16 is formed thereon, and then a protective coat layer (not shown) made of an ultraviolet curing resin is formed thereon. The reproduction layer is made of a magnetic film material having a small domain wall coercive force, and the intermediate layer is a magnetic film having a low Curie temperature. In addition, the recording layer is formed of a magnetic film capable of holding recording magnetic domains, even if the domain diameter is small.

As shown in the figure, an information signal is formed as recorded magnetic domains thermomagnetically recorded on the recording layer. In the case of the recording film not radiated by a laser light spot (optical beam spot 5) at room temperature, the recording layer, the intermediate layer and the reproduction layer are exchange-coupled strongly to each other; therefore, the recording magnetic domains of the reproduction layer are transferred directly to the reproduction layer, and transferred magnetic domains are formed on the reproduction layer. The portion (b) of FIG. 3 shows the relationship between the position x corresponding to the sectional view of the portion (a) and the temperature T of the recording film. As shown in the figure, during the reproduction of a recorded signal, the optical disc recording medium rotates, and the reproduction beam spot by laser light radiates along the track.

x designates a position on the optical disc recording medium, and the x axis is situated along the track of the optical disc recording medium. In the case when it is assumed that the optical beam spot 5 is fixed, the optical disc recording medium relatively moves from right to left in FIG. 3 (from plus to minus on the x axis). In a typical case, the optical disc recording medium moves by rotation. In the case when it is assumed that the optical disc recording medium is fixed, the optical beam spot 5 relatively moves from left to right in FIG. 3 (from minus to plus on the x axis). At this time, the recording film has a temperature distribution shown in the portion (b) of FIG. 3, and there is a temperature range wherein the intermediate layer has a temperature not less than the Curie temperature Tc; in this temperature range, the intermediate layer breaks the exchange coupling between the reproduction layer and the recording layer.

In addition, domain wall energy density σ depending on temperature shows the magnetic energy distribution shown in the portion (c) of FIG. 3 when a reproduction beam is radiated. In other words, since there is a gradient in the domain wall energy density on the x axis as shown in the portion (c) of FIG. 3, a force F for driving domain walls is applied to the domain walls of each layer at the position x as shown in the portion (d) of FIG. 3. This force F applied to the recording film is proportional to the differential of the domain wall energy density and is applied to displace the domain walls in a direction wherein the domain wall energy density σ decreases as shown in the portion (d) of FIG.3. In the portion (d) of FIG.3, the force F is applied from minus to plus on the x axis when F(x) > 0, and from plus to minus on the x axis when F(x) < 0.

In the reproduction layer 13, the domain wall coercive force is small, and the mobility of the domain walls is large; hence, in the reproduction layer 13 alone having unclosed domain walls (in a region wherein the intermediate layer 14 has a temperature exceeding the Curie temperature Tc), the domain walls are displaced easily by this force F. Hence, the region of the reproduction layer 13, making contact with the region wherein the intermediate layer 14 has a temperature exceeding the Curie temperature Tc, becomes a nearly single wide magnetic domain. The information in the magnetic domain being located in immediately front of and making contact with the region wherein the intermediate layer 14 has a temperature exceeding the Curie temperature Tc is transferred to the above-mentioned nearly single wide magnetic domain. As shown in the portion (b) of FIG.3, the temperature distribution of the recording film is not symmetrical. The temperature at the position x lowers from the peak position of the temperature to the rear of the optical beam spot 5 at a gentle gradient, and then lowers from the peak position of the temperature to the front at a steep gradient (the advancing direction of the optical beam spot 5 is referred to as "front" and the advancing direction of the optical disc recording medium is referred to as "rear"). Since the force F for pushing and widening magnetic domains is large at the front wherein the gradient is steep, the domain wall of the magnetic domain being located in front of and making contact with the region wherein the temperature exceeds the Curie temperature Tc is displaced instantaneously to the rear of the region, thereby forming a single wide magnetic domain (because the force F overcomes the coupling forces of the magnetic domains of the intermediate layer 14 and the reproduction layer 13.)

Hence, when the optical disc recording medium is moved relatively, and when the magnetic domain being located in immediately front of and making contact with the region of the intermediate layer 14 wherein the temperature exceeds the Curie temperature Tc is exchanged with a new magnetic domain, the domain wall of the reproduction layer 13 is displaced instantaneously to the rear of the region wherein the intermediate layer 14 has a temperature exceeding the Curie temperature Tc. Then, the magnetization directions in the reproduction layer 13 inside the reproduction beam spot are aligned in the same direction in the wide region. As a result, even if the recording magnetic domains of the recording layer 15 are very small, a wide magnetic domain as large as the region of the intermediate layer 14 wherein the temperature exceeds the Curie temperature Tc is formed in the reproduction layer 13; therefore, even if the recording density is improved, reproduction can be performed under magnification, whereby it is possible to obtain a reproduced signal having a constant amplitude or larger. In the DWDD system, in order to cause the displacement of domain walls, it is certainly necessary to form a magnetic domain structure including unclosed domain walls. The magnetic coupling between adjacent tracks becomes a factor of inhibiting the displacement of the domain walls. Hence, it was necessary to use a system for separating the recording tracks by using laser light (annealing process) or to use a system for carrying out magnetic shutoff by using grooves or inter-grooves or to use both of these two systems. In order to carry out magnetic separation between the recording tracks, inter-grooves or grooves are indispensable between the recording tracks. However, as described above, in the prior art optical disc, it was necessary to obtain a tracking guide signal from grooves; hence, the tracking pitch was unable to be set at not more than 1.2 times the half width of the light beam. In order to carry out magnetic separation between the recording tracks, the present invention is intended to attain a track density not more than 1.2 times the half width of the light beam, while grooves or inter-grooves are provided between the recording tracks. A method of attaining a track density in accordance with Embodiment 1 of the present invention will be described below.

FIG. 4 shows a format configuration of the optical disc recording medium (optical disc recording medium) in accordance with Embodiment 1 of the present invention. The portion (a) of FIG. 4 schematically shows the overall configuration of the optical disc recording medium in accordance with the present invention. In the portion (a) of FIG. 4, numeral 101 designates an optical disc substrate, numeral 102 designates a recording film (corresponding to the reproduction layer 13, the intermediate layer 14 and the recording layer 15 in FIG. 1), numeral 103 designates a first track, numeral 104 designates a second track adjacent to the first track, numeral 105 designates a segment obtained by dividing the first track and the second track 104 into 1280 pieces, numeral 106 designates a pre-pit region (pre-format region) including servo pits for tracking and an address pit indicating the positional information of the disk. The dielectric layers 12 and 16 (FIG. 1) and the like are not shown in FIG. 4.

Pits 108, 109 and 110 and groove 111 are formed on the optical disc substrate 101 by transfer from a stamper at the time of injection. Furthermore, on the polycarbonate substrate 101 formed by this injection method, the recording film 102 conforming to the DWDD system is formed on the polycarbonate substrate 101 by the sputtering method. The optical disc recording medium in accordance with the present invention, formed as described above, has the tracks 103, 104, etc. formed spirally, and the tracks 103, 104, etc. are respectively divided into 1280 segments 105 by the pre-pit regions 106 provided radially (in the radial direction of the optical disc recording medium). The pre-pit regions 106 of the respective segments are aligned in the radial direction of the optical disc recording medium. Hence, in the case when represented by angular coordinates having an origin at the center of the optical disc recording medium, the pre-pit regions are provided radially at every 360 degrees/1280 pieces = 0.28125 degrees on the optical disc recording medium, regardless of the distance from the track position to the origin. One segment 105 has one pre-pit region 106 and one groove portion 111 serving as one data recording region.

At this time, the depth of the groove portion 111 is set at 52 nm (about λ/(8 n)) so that adjacent groove portions are magnetically shut off from each other and a signal conforming to the DWDD system can be reproduced, and so that about 70% of the reflected light from the data recording region provided at the groove portion can be obtained (it is assumed that the reflected light from a flat face without unevenness is 100%). Wobble pits 108 and 109 and the address pit 110 are also formed so as to have the same depth as that of the groove portion 111. FIG. 7 shows the schematic three-dimensional structure of the recording film and the like and the pre-pit regions of the optical disc recording medium. The recording film and the like have already been described referring to FIG. 1 and FIG. 2. In Embodiment 1, the depth of the bottom faces (the upper face of each pit in FIG. 7) of the wobble pits 108 and 109 and the address pit 110 are the same as the depth of the bottom face of the groove portion 111, and the height of the pre-pit region (the flat face between the pits in FIG. 7) other than each pit is the same as the height of the inter-groove portion 114.

As shown in FIG. 4, the first track 103 and the second track 104 are spirally formed so as to be alternately continuous at every other circuit of the disc from the inner circumference to the outer circumference; at a specific segment 112 in the one circuit of the disc 1, switching is carried out between the first track 103 and the second track 104. In the portion (a) of FIG. 4, the optical disc recording medium is a disc having a diameter of about 50 mm, and the track pitch of the first track 103 and the second track 104 is about 0.54 µm. In the portion (a) of FIG. 4 for explaining the format configuration of the optical disc recording medium, the first track 103 and the second track 104, adjacent to each other, are shown magnified significantly in comparison with the overall size of the optical disc recording medium.

The portion (b) of FIG. 4 is a magnified view (a magnified view of the plan view of the optical disc recording medium) in the vicinity of a given segment 105. In the portion (b) of FIG. 4, numeral 105 designates a segment (comprising one data recording region and one pre-pit region), numeral 106 designates a pre-pit region, and the groove portion 111 (2a, 2b in FIG. 1) having a length of 107 is a data recording region for recording data. The pre-pit region 106 has wobble pits 108 and 109 for detecting a tracking signal and an address pit 110 wherein address information indicating the information of the position on the optical disc recording medium is dispersed at the start of the segment, one bit in each segment. The inter-groove portion (land portion) 114 (3a, 3b in FIG. 1) having the length of 107 carries out magnetic shutoff between the adjacent groove portions.

In an optical disc recording medium having a track pitch equivalent to or not more than the half width of the light beam, in order to attain tracking servo, the optical disc recording medium in accordance with the present invention has the wobble pits 108 and 109 for tracking in the pre-pit region 106, and the wobble pit 108 or 109 is shared between the adjacent data recording regions. On the basis of this configuration, the first track 103 and the second track 104 having different tracking polarities (a type wherein the wobble pits 108 and 109 are positioned on the left and right of the extension line in the data recording region and a type wherein the wobble pits are positioned reversely on the right and left are available) are formed alternately at every other circuit. The light beam is switched, and the segment has a structure shown in the portion (c) of FIG. 6. As shown in the figure, the fore-and-aft sequential relationship of the wobble pits 108 and 109 is reversed at this switching point, that is, in the pre-pit region 106 on the left and right sides of the data recording region of the segment 112. Hence, switching is carried out from the second track 104 to the first track 103. This is repeated alternately, and the first track 103 and the second track 104 are disposed continuously.

The optical disc recording medium in accordance with the present invention is an optical disc recording medium having a track pitch of 0.7 µm or less (0.54 µm in Embodiment 1) and carrying out signal recording and reproduction in conformity with the DWDD system, and is significantly characterized in that the data recording region is provided in the groove portion 111 and that the pair of wobble pits 108 and 109 for tracking servo in conformity with the sample servo system is provided in the pre-pit region. With this configuration, the region for detecting the tracking error signal can be spatially separated from the groove 111 serving as the data recording region. Hence, the groove pitch of the groove portions 111 serving as the data recording regions can be set as desired, relieved from a limitation wherein the tracking error signal must be detected optically from the groove portions. Therefore, it was possible to attain an optical disc recording medium having a very high track density wherein the track pitch was 0.54 µ m greatly smaller than that of the prior art optical disc, while the groove 111 was provided in the data recording region 107. At this time, the tracking error signal detected from the wobble pits 108 and 109 was able to securely obtain a very large amount, that is, 0.4 times the amount of the reflected light from the optical disc recording medium. Hence, it was possible to attain stable tracking, while the track pitch is small. Furthermore, the recording medium is also significantly characterized that the surface area usability of the pre-pit region 106 is improved by using at least one of the pair of wobble pits 108 and 109 for tracking and tracking servo is also used on the first track 103 and the second track 104.

This configuration is also effective in preventing cross-erasure wherein, when the track density described in the second task of the prior art technology is improved, the distance between the recording tracks becomes small, whereby the adjacent tracks are erased during recording. it is reported that recording in grooves is more advantageous against cross-write, since the light concentration effect due to the grooves occurs (Lecture No. TuA1 at Optical Data Storage Topical Meeting, 2000). In the prior art optical disc, in the case when grooves less susceptible to cross-write are used as recording tracks, the inter-grooves cannot be used as recording tracks. Therefore, when an attempt was made to improve the track density, no tracking error signal was obtained. In the optical disc in accordance with the present invention, the region 106 for detecting the tracking error signal is spatially separated from the groove portion 111 serving as the data recording region, whereby recording in grooves can be attained although the track pitch is small. Since cross-write occurs at high recording power, if the cross-write characteristic becomes worse, the margin of the recording power is lowered. Table 1 shows the result of the power margin depending on the track pitch in the case of the prior art optical disc wherein flat plates are used as recording tracks and in the case of the optical disc in accordance with the present invention wherein grooves are used as recording tracks. The power margin is the ratio of the range of the power capable of carrying out recording without causing errors regardless of change in the recording power from an optimal recording power. In a rewritable optical disc required to be exchanged, in order to attain compatibility between apparatuses, the width of this power margin is very important. Usually, a power margin of about ±12 to ±15% is necessary to attain a commercially practical optical disc.

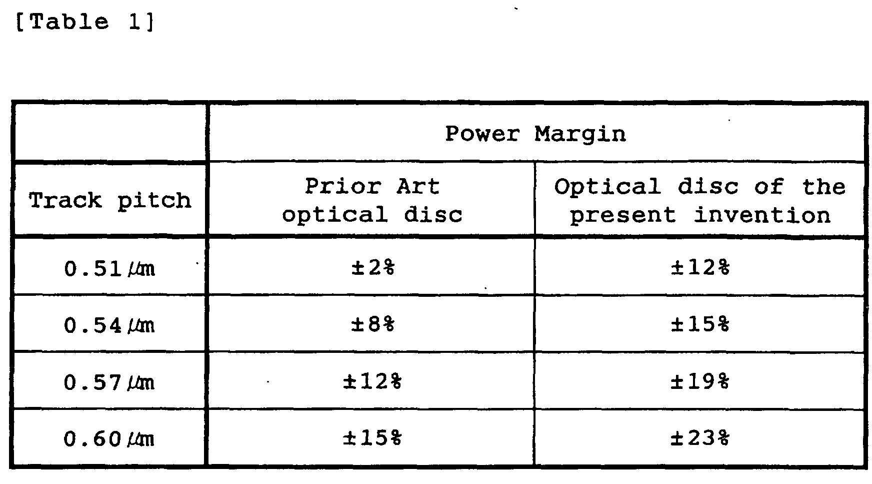

As understood from the result in Table 1, in the optical disc recording medium in accordance with the present invention, by using grooves as data recording regions, the track pitch capable of attaining the same power margin is about 10% narrower than that of the prior art optical disc. With the configuration of the optical disc recording medium in accordance with the present invention, the cross-write characteristic is improved, whereby the track density can be made higher by about 10% than that of the prior art optical disc. This effect is a phenomenon caused by the optical confinement effect derived from the shape of the groove in which recording was carried out; therefore, the effect is obtained not only in the optical disc conforming to the DWDD system, i.e., the super resolution system used in Embodiment 1, but also in all recording optical discs. In the optical disc in accordance with the present invention, by spatially separating the region 106 for detecting the tracking error signal from the groove portion 111 serving as the data recording region, recording in grooves, excellent in the cross-write characteristic, can be attained although the track pitch is small.

By using the above-mentioned configuration of the optical disc in accordance with the present invention, a track pitch not more than 1.1 times the half width of the light beam can be attained. In the case when the light beam for recording and reproduction crosses the grooves 111 in the radial direction, the primary diffraction light (push-pull signal) generated by diffraction occurring on an optical disc having conventional grooves and the groove crossing signal wherein the amount of the reflected light of the zero-order light changes between the groove 111 and the groove 111 are not generated from the grooves 111 disposed as described above at the track pitch not more than 1.1 times the half width of the light beam for recording and reproduction. In other words, although the data recording region 107 has the grooves 111 formed physically, the change of the reflected light is optically similar to that in a flat region (there is no change in the reflected light). This means that disturbance due to the groove crossing signal of the focus signal, a serious problem during seeking in the prior art optical disc, and noise caused from the actuator during seeking owing to the disturbance do not occur; this is particularly advantageous to optical disc apparatuses for recording sound. Furthermore, the above-mentioned characteristic provides a great advantage of being easily capable of detecting the pre-pit region 106. In order to explain this characteristic, a method of demodulating the address pit 110 from the pre-pit region 106 and a method of detecting the tracking error signal will be described briefly.

First, an address detection method will be described briefly. The optical disc in accordance with the present invention has the first track 103 and the second track 104 having different tracking servo polarities switched alternately for every other circuit of the disc, and polarity switching timing is generated by the demodulation of this address. The address pit 110 shown in the portion (b) of FIG. 4 designates one bit of address data depending on the presence or absence thereof. This corresponds to the dispersed address format (Japanese Patent Application No. Hei 11-021885 and Japanese Patent Application No. Hei 11-329265) invented by the inventors of the present invention. This dispersed address format will be briefly described by using FIG. 6. The track for one circuit of the optical disc recording medium is divided into 1280 segments, and one address bit is assigned to each pre-pit region of the 1280 segments (the address pit is present or absent).

The 1280 segments 105 in one circuit of the disc are divided into 16 pieces to generate address information (information depending on the presence or absence of address pits) in the unit of 1280/16 = 80-bit addresses. The 80-bit address information comprises 7-bit segment number information (positional information in the rotation direction) 601, 11-bit error detection code 602 of the segment number information, 16-bit track number information (track number of a track) 603 of the odd-numbered track 103, 15-bit BCH-coded error corrosion information 604 of the track number information of the odd-numbered track, 16-bit track number information 605 of the even-numbered track 104, and 15-bit BCH-coded error corrosion information 606 of the track number information of the even-numbered track.

The angle information of the optical disc recording medium can be obtained from the segment information.

The segment number information 601 and the error detection code 602 of the segment number information are aligned in the radial direction respectively. The 16 pieces of the segment number information disposed in every circuit designate 16 segment numbers. By counting the number of segments starting from the 16 segments, the segment numbers of other segments can be specified. Furthermore, since the segments adjacent to each other in the radial direction from the innermost track to the outermost track have the same segment number information 601 and the same error detection code 602 of the segment number information, the segment number information can be detected even when tracking control is not carried out (even during seeking, for example). Hence, even when tracking control is not carried out, the pre-pit region 113 of the switching point can be detected.

By carrying out tracking control and by reading the track numbers 603 and 605, the positional information in the radial direction is obtained. The track numbers 603 and 605 are used as retrieval information for disc seeking, for example. In the case of the pre-pit region wherein the track number information 603 of the odd-numbered track 103 and the error corrosion information 604 of the track number information of the odd-numbered track are present, the track number information 605 of the even-numbered track 104 and the error corrosion information 606 of the track number information of the even-numbered track are absent in the pre-pit region adjacent thereto. Similarly, in the case of the pre-pit region wherein the track number information 605 of the even-numbered track 104 and the error corrosion information 606 of the track number information of the even-numbered track are present, the track number information 603 of the odd-numbered track 103 and the error corrosion information 604 of the track number information of the odd-numbered track are absent in the pre-pit region adjacent thereto.

In 16 pieces of address information in one circuit, the address information having the track number information 603 of the above-mentioned odd-numbered track 103 and the like and the address information having the track number information 605 of the even-numbered track 104 and the like are disposed alternately, 8 pieces for each. Hence, erroneous reading of track numbers due to crosstalk between adjacent tracks can be prevented. In addition, even in a state wherein on-track cannot be attained completely, track numbers can be read accurately. In the optical disc recording medium in accordance with the present invention, since the polarity for tracking control changes at every other circuit, control for detecting the position of the optical pickup on the optical disc recording medium and for appropriately reversing the tracking polarity is necessary; the timing control for this purpose is carried out by detecting the address data (the segment number information 601 and the error detection code 602 of the segment number information)'.

FIG. 8 shows a schematic configuration of the tracking error signal detection portion of an optical disc apparatus in accordance with the present invention. Numeral 801 designates a binarization device, numeral 802 designates a groove portion detector, numeral 803 designates an edge window generator, numeral 804 designates a phase comparator operating in the edge window output from the edge window generator 803, numeral 805 designates a voltage-controlled oscillator (VCO), numeral 806 designates a frequency divider having a frequency division ratio of 325, numeral 807 designates a window generator for outputting a first wobble pit, numeral 808 designates a window generator for outputting a second wobble pit, and numerals 809 and 810 are minimum level detectors, and numeral 811 designates a subtracter.

The optical disc apparatus in accordance with the present invention is greatly characterized by this tracking error detection method. In a prior art sample servo system, tracking error detection was carried out by the method described below, for example. A clock pit is provided at a constant position in each pre-pit region of the optical disc recording medium. By making the time required while a light beam passes from a clock pit to the next clock pit during reproduction constant, the clock pit is detected, and the frequency division signal of an internal PLL is locked to the output signal of the above-mentioned clock pit. By sampling the maximum point of the wobble pits by using the output signal (clock signal) of the internal PLL as a reference clock, the tracking error signal is detected. In other prior art examples, clock pits are not provided. Instead, by using the output signal of one wobble pit as the alternative signal of the output signal of the clock pit (the frequency division signal of the internal PLL is locked to the output signal of the above-mentioned wobble pit), the tracking error detection signal is detected. Hence, the criterion for determining the timing was the distance (or elapsed time) between clock pits (or wobble pits).

Since the optical disc recording medium in accordance with the present invention has a track pitch similar to the half width of the intensity of the light beam, the tracking error signal conforming to the push-pull system similar to the prior art system cannot be detected. The optical disc recording medium in accordance with the present invention is controlled by sample servo wherein wobble pits are used. FIG. 9 shows a reproduced signal in the case when the segment 105 is reproduced and also shows a part of the signal of the tracking error detection portion in the optical disc apparatus in accordance with the present invention. Numeral 901 designates a reproduced signal at the time when the segment105 is reproduced, numeral 902 designates a slice level for binarizing the reproduced signal 901, numeral 903 designates a signal obtained by binarizing the reproduced signal, and numeral 907 designates an edge window signal.

Since the groove portion 111 is formed in the segment 105 in the optical disc recording medium in accordance with the present invention, groove edge signals 905 and 906 are detected on the basis of the output signal from the groove portion 111. In the optical disc recording medium in accordance with the present invention, the period 904 between the groove edge signals 905 and 906 on the basis of the length 107 of the groove portion 111 has a unique time duration detected only when the output signal of the groove portion 111 is detected. The "unique time duration" means a time duration, on the basis of which the signal can be clearly distinguished from other signals.

For example, in the case when the optical disc recording medium is controlled in a constant rotation speed mode (hereafter, referred to as the "CAV (constant angular velocity) mode"), the period 904 is a constant period and the longest period detectable among the reproduced signals of the optical disc recording medium. In addition, in the case when the optical disc recording medium is controlled in a constant linear velocity mode (hereafter, referred to as the "CLV (constant linear velocity) mode"), the period 904 is a period proportional to the radius of the data recording region being passed and the longest period detectable among the reproduced signals of the optical disc recording medium at the radius. The optical disc apparatus in accordance with the present invention is characterized in that it uses the groove edge signals 905 and 906.

The binarization device 801 receives the reproduced signal 901 from the optical disc recording medium, slices the signal at the slice level 902 and outputs the binarized signal 903. The groove portion detector 802 receives the binarized signal 903 and detects the unique period 904. In the case of this embodiment, since the unique period is the longest period among the reproduced signals from the optical disc recording medium, the groove portion detector comprises a simple circuit that detects signals having a constant time or more. The groove portion detector 802 outputs a pulse having the same edge as that of the groove edge signal 905.

The edge window generator 803 receives the pulse output by the groove portion detector 802, and generates and outputs a window signal 907 obtained by delaying the pulse. The VCO 805 outputs a reference clock. The frequency divider 806 having a frequency division ratio of 325 receives the reference clock, divides it into 1/325 and outputs a frequency division signal. The frequency division signal is transmitted to the phase comparator 804, the window generator 807 for the first wobble pit output and the window generator 808 for the second wobble pit output. The phase comparator 804 receives the binarized signal 903, the frequency division signal and the window signal 907, compares the binarized signal 903 with the frequency division signal with respect to phase in the high period of the window signal 907, and outputs the phase difference signal 908 between the two. The phase difference signal 908 is input to the VCO 805. By the above-mentioned control circuit, the reference clock output from the VCO 805 is locked to (synchronized with) the groove edge signal 905. The above-mentioned circuit synchronizes the reference clock output by the VCO 805 with the groove edge signal 905; however, in another embodiment, the reference clock is synchronized with the groove edge signal 906.

After receiving the frequency division signal, the window generator 807 for the first wobble pit output generates and outputs a window signal 909 for detecting the first wobble pit output. The window signal 909 for detecting the first wobble pit output is a signal wherein a first point obtained by counting a first number of VCO output signals starting from the groove edge signal 905 is used as the leading edge of the window signal 909 for detection, and a second point obtained by counting a second number of VCO output signals starting from the groove edge signal 905 is used as the trailing edge of the window signal 909 for detection.

After receiving the frequency division signal, the window generator 808 for the second wobble pit output generates and outputs a window signal 910 for detecting the second wobble pit output. In a similar way, the window signal 909 for detecting the second wobble pit output is a signal wherein a third point obtained by counting a third number of VCO output signals starting from the groove edge signal 905 is used as the leading edge of the window signal 910 for detection, and a fourth point obtained by counting a fourth number of VCO output signals starting from the groove edge signal 905 is used as the trailing edge of the window signal 910 for detection.

The minimum level detector 809 receives the reproduced signal 901 of the optical disc recording medium and the window signal 909 for detecting the first wobble pit output, and holds and outputs the minimum value of the reproduced signal 901 in the period of this window signal 909. In a similar way, the minimum level detector 810 receives the reproduced signal 901 of the optical disc recording medium and the window signal 910 for detecting the second wobble pit output, and holds and outputs the minimum value of the reproduced signal 901 in the period of this window signal 910. The subtracter 811 generates and outputs the difference signal of the two minimum values. This output signal is the tracking error signal (error signal).

In the optical disc recording medium in accordance with the present invention, in the case when the light beam for recording and reproduction crosses the grooves 111 in the radial direction, the primary diffraction light (push-pull signal) generated by diffraction occurring on an optical disc having conventional grooves and the groove crossing signal wherein the amount of the reflected light of the zero-order light changes between the groove 111 and the groove 111 are not generated from the grooves 111. Since the amount of reflected light at the groove 111 does not change as described in the above-mentioned detection method, the pre-pit region can be distinguished easily, whereby the configuration is significantly characterized in that the address pit 110, the wobble pits 108 and 109 can be extracted. By this characteristic, the configuration of the apparatus can be simplified, and the generation of tracking can be made faster.

When a recording mark having a recording mark length of 0.133 µm was recorded on the optical disc recording medium in accordance with the present invention configured as described above, jitter was 8% of the record data window, whereby a sufficient S/N was obtained. In addition, when a random pattern was recorded at a recording density of 0.1 µm/bit by using 1-7 modulation codes, equalized to a PR (1, -1) transmission line and demodulated, an error rate sufficient for configuring an optical disc apparatus, 5.2E-5 (5.2 × 10⁻⁵), was obtained. As described above, by the above-mentioned configuration, the optical disc recording medium in accordance with the present invention can carry out high-performance DWDD operation at a high-density track pitch that was impossible conventionally. When the track pitch was not more than 1.2 times the half width (about 0.6 µm) of the intensity of the light beam, tracking control was unable to be carried out by the prior art system. In this embodiment, high-precision tracking control was attained at a track pitch of 0.54 µm, not more than 1.2 times the half width of the intensity of the light beam.

In Embodiment 1, at least one of the pair of wobble pits 108 and 109 for tracking servo in the pre-pit region is shared by the first track 103 and the second track 104 adjacent to each other whereby the surface area usability of the pre-pit region 106 is improved. however, the method is not always limited to this method. FIG. 5 is a magnified view showing the pre-pit region and the like of the optical disc recording medium in accordance with another embodiment. As shown in FIG. 5, in the odd-numbered track 103 and the even-numbered track 104, the wobble pits 108 and 109 may be disposed independently of each other at different positions in the track direction in the pre-pit region 106. Even when one of the pair of wobble pits 108 and 109 is not shared by the first track 103 and the second track 104 adjacent to each other, an optical disc recording medium having a function similar to that of Embodiment 1 can be attained by shifting the positions in the track direction.

Next, the method of carrying out separation between recording tracks by the radiation of a laser beam was applied to Embodiment 1, and the result is described. Since the magnetic shutoff region for separating the recording tracks does not generate a reproduced signal, if the shutoff region is wide, the amplitude of the reproduced signal lowers, resulting in an error. The higher the track density, the more significant the effect of this magnetic shutoff region. Only the shutoff effect at grooves is not sufficient in narrowing the width of the magnetic shutoff region. As the track density increases, the widths of the grooves or inter-grooves formed between the data recording regions decrease. In Embodiment 1 of the present invention, by carrying out beam tracking by using the inter-groove formed between the tracks of the data recording regions as a guide, a constant region was able to be processed accurately by using the beam (in the embodiment, a region having a constant width was annealed by using the beam so as to be changed in quality). Hence, the magnetic shutoff effect was able to be enhanced.

An optical beam obtained by condensing laser light having a wavelength of 405 nm with a lens having an NA of 0.6 was used to carry out tracking at the inter-groove between the grooves 111 of the data recording regions 107, whereby the inter-groove between the grooves 111 was heat-treated, and the magnetic separation effect was enhanced. The power of the radiated laser light was set at 4.8 mW, a value in which the characteristic became most excellent. When a recording mark having a recording mark length of 0.10 µm was recorded on this optical disc recording medium, jitter was 8% of the record data window, whereby a sufficient S/N was obtained. In addition, when a random pattern was recorded at a recording density of 0.08 µm/bit by using 1-7 modulation codes, equalized to PR (1, -1) transmission and demodulated, an error rate sufficient for configuring an optical disc apparatus, 7.2E-5 (7.2 × 10⁻⁵), was obtained. As described above, in the optical disc recording medium in accordance with the present invention, the linear recording density was able to be improved about 20% by the processing of the beam used for tracking by using the inter-groove formed between the tracks of the data recording regions as a guide, whereby a higher density was attained. This is because the processing power of the beam for carrying out magnetic separation lowers, whereby magnetic separation can be carried out at a narrower width. The grooves and the inter-grooves formed between the tracks of the data recording regions at this time play a role as a guide for carrying out magnetic separation and also plays a role in lowering the processing power of the beam for carrying out magnetic separation by carrying out magnetic separation to some extent by using the steps at the grooves.

In Embodiment 1, the number of segments in one track (having the length of one circuit of the optical disc recording medium) was 1280, the number of servo-channel bits per segment was 325 (1280 × 325 = 416 kbits = 52 kB), and the number of addresses in one circuit was 16 (one address was assigned to every 80 segments); however, each of these is just one example, and the format of the optical disc recording medium may be determined as desired, provided that they are in ranges wherein tracking control can be carried out stably. In addition, the depth of the groove was set at 52 nm, that is, about λ/(8 n) in the wavelength range of red laser light (wavelength: 660 nm); however, the format of the optical disc recording medium may be determined as desired, provided that the adjacent data recording regions are magnetically shut off from each other and have groove portions having a depth wherein reproduction conforming to the DWDD system is possible and also provided that the depth is in the range wherein the tracking error signal can be detected from the wobble pits.

In Embodiment 1, the optical disc substrate is made of polycarbonate; however, optical disc substrates made of other material may also be used (this is also similarly applicable to embodiments other than Embodiment 1). For example, polyolefin, glass and PMMA may be used. The refractive indexes of these materials, polyolefin, glass and PMMA, are n = 1.52 to 1.53, n = 1.52 and n = 1.49, respectively. Hence, even when optical disc substrates made of materials other than polycarbonate are used, the optimal depth of the groove portion does not have a significantly different value.

In this embodiment, laser light having a wavelength λ of 660 nm is used, and the numerical aperture is 0.60. Hence, in the prior art reproduction method (a reproduction method different from the DWDD system), the limit of detection was λ /(2 · NA) = 0.55 to 0.60 µm. The optical disc recording medium in accordance with the present invention can perform reproduction conforming to the DWDD system; according to an experiment, a signal having a mark length of 0.1 µm was able to be reproduced. Therefore, by this embodiment, it was able to attain a recording density about six times the conventional value in the direction of the length. The optical disc recording medium in accordance with the present invention, for example, the optical disc recording medium in accordance with Embodiment 1, has a recording film and the like suited for reproduction conforming to the DWDD system. However, the configuration of the recording film of the optical disc recording medium in accordance with Embodiment 1 is an example, and the configuration is not limited to this.

### [Embodiment 2]

Embodiment 2 in accordance with the present invention will be described below in detail referred to the drawings. FIG. 10 shows an optical disc recording medium in accordance with Embodiment 2 of the present invention. The portion (a) of FIG. 10 schematically shows the overall configuration of the optical disc recording medium in accordance with the present invention. In the portion (a) of FIG. 10, numeral 1001 designates an optical disc substrate, numeral 1002 designates a recording film (corresponding to the reproduction layer 13, the intermediate layer 14 and the recording layer 15 in FIG. 1), numeral 1003 designates a first track, numeral 1004 designates a second track adjacent to the first track, numeral 1005 designates a segment obtained by dividing the first track 1003 and the second track 1004 into 1280 pieces, numeral 1006 designates a pre-pit region (pre-format region) including tracking servo-pits and an address pit indicating the positional information of the disk.

The configuration shown in the position (a) of FIG. 10 is the same as the configuration shown in the position (a) of FIG. 4.

The portion (b) of FIG. 10 is a magnified view of the pre-pit region 1006 and the like. In the portion (b) of FIG. 10, numeral 1005 designates a segment (comprising one data recording region and one pre-pit region), numeral 1006 designates a pre-pit region, a groove portion 1011 (2a, 2b in FIG. 1) having a length of 1007 is a data recording region for recording data. The pre-pit region 1006 has wobble pits 1008 and 1009 for detecting the tracking signal and an address pit 1010 wherein address information indicating the information of the position on the optical disc recording medium is dispersed at the start of the segment, one bit in each segment. An inter-groove portion (land portion) 1014 (3a, 3b in FIG. 1) having the length of 1007 carries out magnetic shutoff between the adjacent groove portions.

In the optical disc recording medium in accordance with the present invention, in order to attain a track pitch of 1 µm or less (0.6 µm in Embodiment 2) while having grooves wherein reproduction conforming to the DWDD system is possible, tracking is carried out in conformity with the sample servo system by using the wobble pits 1008 and 1009, the groove 1010 is provided in the data recording region 1007 for carrying out reproduction in conformity with the DWDD system, and a servo pit is shared by the adjacent tracks, just as in the case of Embodiment 1.

Embodiment 2 is significantly characterized in that the height of the inter-groove portion 1014, measured from the bottom face of the groove portion 1011, is smaller than the height of the flat face between the pits in the pre-pit region. The bottom face of the groove portion 1011 and the bottom faces of the wobble pits 1008 and 1009 and the address pit 1010 are on nearly the same plane. In Embodiment 1, the bottom face of the groove portion 111 and the bottom faces of the wobble pits 108 and 109 and the address pit 110 are on nearly the same plane, and the upper face of the inter-groove portion 114 and the flat face between the pits in the pre-pit region 106 are on nearly the same plane. When the depths of the groove portion and the pits were made larger, the reproduction level of the reproduced signal in the data recording region disposed in the groove portion lowered, whereby the depths of the groove portion and the pits were unable to be made too large. This caused a problem of being unable to obtain a large value as the amplitude of the tracking error signal obtained from the pits.

In order to obtain a constant value or more as the S/N of the reproduced signal conforming to the DWDD system, it is necessary to obtain a certain value or more as the amount of reflected light at the groove portion; therefore, it is necessary to set the depth of the groove at about λ/(8 n) to λ/(6 n). However, when the amount of reflected light at the groove portion was obtained, the degree of modulation in the pre-pit region lowered, thereby causing a problem of lowering the signal amplitude. The optical disc recording medium in accordance with Embodiment 2 has a sufficiently large amount of reflected light at the groove portion and has a sufficiently large degree of modulation in the pre-pit region.

The method of producing the optical disc recording medium in accordance with Embodiment 2 is similar to the method of producing the optical disc recording medium in accordance with Embodiment 1, except the method of forming an original master. The method of forming the original master in accordance with Embodiment 2 will be described in detail. A mastering apparatus (an apparatus for forming an original master) for an optical disc recording medium is made by the known photo-electroforming method. A glass disc is cleaned, and the cleaned disc is coated with a photoresist. The disc coated with the photoresist is baked, the solvent of the photoresist is removed, and the photoresist is cured. A signal is recorded on the baked disc by using a laser beam.

The recorded disc is developed. By the development, the photoresist at the portions radiated by the laser beam is removed. Since the glass disc is nonconductive, a conductive film is required to be formed in order to carry out electroforming at the next step; hence, Ni is sputtered to the developed disc. Electroforming is carried out for the disc subjected to the sputtering, whereby an original master is formed on the disc. The back face of the original master subjected to the electroforming is ground, and the original master is removed from the glass disc. A hole is bored at the center axis of the removed original master. The bored original master is cleaned to remove the photoresist and the like remaining on the surface. By the above-mentioned steps, the original master is completed. Then, a stamper is formed from the original master, and optical disc recording media are replicated by carrying out stamping by using the stamper.

As a method of forming an original master having deep pre-pit regions and shallow groove portions, a method of lowering laser power at the groove portions during the radiation (cutting) using the laser beam has been used conventionally. However, when the laser power was lowered during groove cutting, shallow grooves was able to be formed, but groove forming became unstable, thereby causing a problem of making the wall faces of the grooves rough. The optical disc recording medium in accordance with the present invention wherein reproduction was carried out by using the displacement of domain walls caused a fatal problem wherein the displacement of the domain walls was interfered with the roughness of the wall faces of the grooves.

In the optical disc recording medium in accordance with Embodiment 2 of the present invention, this problem was solved by forming shallow land portions by increasing the laser power at the groove portions during original master cutting or by providing a region doubly exposed to the laser light during adjacent groove cutting. A method of cutting an original master will be described by using FIG. 11. First, a resist is applied to deep pits in the original master. The portion (a) of FIG. 11 is a sectional view showing a part of the original master on the A-B plane in the portion (b) of FIG. 10. When cutting the pre-pit regions shown on the A-B plane in the portion (b) of FIG. 10, since the cutting pitch (the pitch of the adjacent wobble pits) is a large value of 1.2 µm, there is no interference between the pits formed by the laser light; hence, pits specified on the resist face are formed as shown in the portion (a) of FIG. 11. The upper face of the resist in the portion (a) of FIG. 11 specifies the flat face between the pits in the pre-pit regions on the optical disc substrate, and the upper face of the glass original master serving as the bottom faces of the pits for the wobble pits and the like specifies the bottom faces of the wobble pits and the like.

The portion (b) of FIG. 11 is a sectional view showing a part of the original master on the C-D plane in the portion (b) of FIG. 10. When cutting the groove portions 1011 and the inter-groove portions 1014 shown on the C-D plane in the portion (b) of FIG. 10, since the track pitch is a small value of 0.6 µm, when the laser power for cutting the groove portions is set appropriately, mutual interference occurs at the adjacent groove portions formed by the laser light, and the height of the face of the land can be made lower than the face coated with the resist. In the portion (b) of FIG. 11, the upper face of the inter-groove portion 1014 is cut by the laser beam for forming the adjacent groove portions 1011 on both sides and formed into an inverted V shape (the flat face at the apex is lost). The apex of the inverted V shape is lower than the upper face of the resist. The resist of the inverted V shape in the portion (b) of FIG. 11 specifies the groove portions of the optical disc substrate, and the upper face of the glass original master serving as the bottom faces of the grooves of the groove portions specifies the bottom faces of the groove portions. As described above, the original master for the optical disc recording medium in accordance with Embodiment 2 of the present invention is produced so that the height of the inter-groove portion 1014 measured from the bottom face of the groove portion 1011 is lower than the height of the flat face between the pits in the pre-pit region. In other words, the bottom faces of the groove portions are formed so as to be relatively shallower than the bottom faces of the wobble pits and the like.

By the above-mentioned method, an original master was formed wherein the depth of the groove portion (the difference in height between the upper face of the land portion and the bottom face of the groove portion) was set at λ/(8 n) toλ/(6 n), that is, 55 nm, and the depth of the wobble pits in the pre-pit region 1006 (the difference in height between the upper face of the space between the pits in the pre-pit region and the bottom faces of the wobble pits) was set at λ/(5 n) to λ/(4 n), that is, 82 nm. An optical disc recording medium was formed from the original master by a method similar to that of Embodiment 1. The portion (c) of FIG. 10 shows a reproduced signal 1012 from the optical disc recording medium in accordance with Embodiment 2. The amplitude of the wobble pit signals 1008, 1009, etc. was doubled approximately in comparison with Embodiment 1, whereby it was possible to obtain a high-precision tracking error signal. In addition, the amplitude of the reproduced signal at the address pit 1010 was also doubled approximately, whereby it was possible to lower the error rate of the address signal.

When a recording mark having a recording mark length of 0.1 µm was recorded on the optical disc recording medium in accordance with Embodiment 2, just as in the case of Embodiment 1, jitter was 8.5% of the record data window, whereby a sufficient S/N was obtained. In addition, when a random pattern was recorded at a recording density of 0.1 µm/bit by using 1-7 modulation codes, equalized to a PR (1, -1) transmission line and demodulated, an error rate sufficient for configuring an optical disc apparatus, 8.2E- 5, was obtained. As described above, by the above-mentioned configuration, the optical disc recording medium in accordance with the present invention can carry out high-performance DWDD operation at a high-density track pitch that was impossible conventionally. When the track pitch was not more than 1.2 times the half width (about 0.6 µm) of the intensity of the light beam, tracking control was unable to be carried out by the prior art system. In this embodiment, high-precision tracking control was attained at a track pitch of 0.6 µm, not more than 1.2 times the half width of the intensity of the light beam.

### [Embodiment 3]

Embodiment 3 in accordance with the present invention will be described below in detail referred to FIG. 12. The portion (a) of FIG. 12 schematically shows an overall configuration of the optical disc recording medium in accordance with the present invention. In the portion (a) of FIG. 12, numeral 1201 designates an optical disc substrate, numeral 1202 designates a recording film (corresponding to the reproduction layer 13, the intermediate layer 14 and the recording layer 15 in FIG. 1), numeral 1203 designates a first track, numeral 1204 designates a second track adjacent to the first track, numeral 1205 designates a segment obtained by dividing the first track 1203 and the second track 1204 into 1280 pieces, numeral 1206 designates a pre-pit region (pre-format region) including tracking servo-pits and an address pit indicating the positional information of the disk. The configuration shown in the position (a) of FIG. 10 is the same as the configuration of the optical disc recording medium in accordance with Embodiment 1 shown in the position (a) of FIG. 4.

The portion (b) of FIG. 12 is a magnified view showing the pre-pit region 1206. In the portion (b) of FIG. 12, numeral 1205 designates a segment (comprising one data recording region and one pre-pit region), numeral 1206 designates a pre-pit region, an inter-groove portion (land portion) 1214 having a length of 1207 is a data recording region for recording data. The pre-pit region 1206 has wobble pits 1208 and 1209 for detecting the tracking signal and an address pit wherein address information indicating the information of the position on the optical disc recording medium is dispersed at the start of the segment, one bit in each segment. A groove, portion 1211 having the length of 1207 carries out magnetic shutoff between the adjacent inter-groove portions.

The optical disc recording medium in accordance with the present invention is an optical disc recording medium, having a track pitch of 0.6 µm, for recording/reproducing signals in conformity with the DWDD system and has inter-groove portions (land portions) serving as data recording regions, and the wobble pits 1208 and 1209 for tracking servo conforming to the sample servo system are shared by the adjacent tracks.

In Embodiment 1, the data recording region was provided in the groove portion in order to reproduce signals in conformity with the DWDD system; however, in Embodiment 3, the data recording region is provided in the inter-groove portion (land portion), and the adjacent data recording regions are magnetically shut off by the groove portion (the recording films of the adjacent data recording regions are magnetically shut off). In the case when the inter-groove portions are used for the data recording regions as described above, recording marks become stable during recording, whereby shorter recording marks can be formed. In this kind of optical disc recording medium conforming to the DWDD system, wherein the inter-groove portions are used as the data recording regions, the bottom face of the groove portion is required to have a depth of about 120 nm or more measured from the upper face of the inter-groove portion in order to magnetically shut off the recording film at the groove portion. Even in this case, just as in the case of Embodiment 1, tracking control cannot be attained by using the grooves when the track pitch is not more than about 1.2 times the half width of the light beam.

In Embodiment 3, optical disc recording media, in which the depths of the groove portion 1211, the wobble pits 1208 and 1209 and the address pit 1210 were set at 140 nm, 160 nm, 180 nm and 200 nm, were produced by way of trial and examined. Since the method of producing the optical disc recording media is similar to that of Embodiment 1, its explanation is omitted. Table 2 shows the results of the tracking error amplitude/the amount of reflected light from flat portion, the percentage of (the amount of reflected light from data recording region/the amount of reflected light from flat portion) (the track light amount ratio/the amount of, reflected light from flat portion in Table 2), jitter and error rate at each depth.

**[Table 2]**

| Depth | Tracking error amplitude/amount of light from flat portion | Track light amount ratio/amount of light from flat portion | Jitter | Error rate |
|---|---|---|---|---|
| 140nm | 1.4 | 30% | 16% | 2.5E-2 |
| 160nm | 1.2 | 45% | 10.5% | 2.2E-4 |
| 180nm | 0.7 | 65% | 8.5% | 6.0E-5 |
| 200nm | 0.6 | 70% | 8% | 2.2E-5 |

The deeper the groove portion, the smaller the tracking error amplitude; however, even the wobble pit having a depth of 200 nm can obtain an amount of reflected light 0.6 times (60%) the amount of reflected light from the flat portion. On the other hand, in the case of the optical disc recording medium with groove portions having a depth of 140 nm (the data recording regions are provided in the inter-groove portions), the amount of reflected light from the data recording region is only about 30% of the amount of reflected light from the flat portion; however, in the case of the optical disc recording medium with groove portions having a depth of 200 nm, the amount of reflected light from the data recording region increases to about 70% of the amount of reflected light from the flat portion. From the viewpoint of the tracking error amplitude, the depth of the groove portion is preferably about 140 nm ((3 λ)/(8 n)), and from the viewpoint of the S/N of the reproduced signal, the depth of the groove portion is preferably larger (200 nm).

However, when the amount of reflected light about 0.6 times the amount of reflected light from the flat portion is obtained from the wobble pit, sufficient tracking control is made possible; however, when the amount of reflected light is about 30% of the amount of reflected light from the flat portion, the S/N ratio of the reproduced signal is insufficient. When the error rate of the reproduced signal read from the optical disc recording medium in accordance with Embodiment 3 provided with the data recording regions only in the inter-groove portions is examined, an error rate that can be used practically can be obtained when the groove depth is 160 nm (3 λ/(8 n)) or more. The groove portion preferably has a depth of about λ/(2 n) (209 nm). In the optical disc recording medium provided with the groove portions having a depth of about λ/(2 n), the amount of reflected light from the data recording region increases, and the jitter and error rate are also improved in comparison with the optical disc recording media having shallow grooves.

As described above, by the configuration provided with the groove portions and the wobble pits having a depth of about λ/(2 n), the optical disc recording medium in accordance with the present invention can carry out signal reproduction conforming to high-performance DWDD system at a high-density track pitch that was impossible conventionally. When the track pitch was not more than 1.2 times the half width (about 0.6 µm) of the intensity of the light beam, tracking control was unable to be carried out by the prior art system. In this embodiment, high-precision tracking control was attained at a track pitch of 0.6 µm, not more than 1.2 times the half width of the intensity of the light beam.

### [Embodiment 4]

An optical disc recording medium in accordance with Embodiment 4 of the present invention will be described below in detail referred to FIG. 13. The portion (a) of FIG. 13 schematically shows the overall configuration of the optical disc recording medium in accordance with the present invention. In the portion (a) of FIG. 13, numeral 1301 designates an optical disc substrate, numeral 1302 designates a recording film (corresponding to the reproduction layer 13, the intermediate layer 14 and the recording layer 15 in FIG. 1), numeral 1303 designates a first track, numeral 1304 designates a second track adjacent to the first track, numeral 1305 designates a segment obtained by dividing the first track 1303 and the second track 1304 into 1280 pieces, numeral 1306 designates a pre-pit region (pre-format region) including tracking servo-pits and an address pit indicating the positional information of the disk.

The portion (b) of FIG. 13 is a magnified view of the pre-pit region 1306. In the portion (b) of FIG. 13, numeral 1305 designates a segment (comprising one data recording region 1311 and one pre-pit region 1306), numeral 1306 designates the pre-pit region, a groove portion 1311 (2a, 2b in FIG. 1) having a length of 1307 is a data recording region for recording data. The pre-pit region 1306 has wobble pits 1308 and 1309 for detecting the tracking signal and an address pit 1310 wherein address information indicating the information of the position on the optical disc recording medium is dispersed at the start of the segment, one bit in each segment. An inter-groove portion (land portion) 1314 (3a, 3b in FIG. 1) having the length of 1307 carries out magnetic shutoff between the adjacent groove portions. The above-mentioned configuration is the same as that of the optical disc recording medium in accordance with Embodiment 1 (shown in the position (a) of FIG. 4).

The optical disc recording medium in accordance with the present invention is an optical disc recording medium, having a track pitch of 0.74 µ m or less (0.54 µm in Embodiment 4), for recording/reproducing signals in conformity with the DWDD system and has groove portions 1311 serving as data recording regions, wherein the wobble pits 1308 and 1309 for tracking servo conforming to the sample servo system are shared by the adjacent tracks. Embodiment 4 differs from Embodiment 1 in that, in the optical disc recording medium in accordance with Embodiment 1, the pre-pit regions 106 have a radial shape as a whole (the length of the pre-pit region at the outer circumference of the optical disc recording medium is larger than the length of the pre-pit region at the inner circumference thereof), on the other hand, in the optical disc recording medium in accordance with Embodiment 4, the pre-pit regions 1306 have a nearly rectangular shape as a whole (the length of the pre-pit region at the inner circumference of the optical disc recording medium is equal to the length of the pre-pit region at the outer circumference thereof). FIG. 14 is a view showing a part of the pre-pit regions 1306 and the data recording regions 1307, magnified at the inner and outer circumferences of the disc. In the prior art optical disc, the servo regions (the pre-pit regions) 1306 spread in a sector shape from the inner circumference to the outer circumference of the optical disc recording medium; however, in the optical disc in accordance with the present invention, the lengths of the servo regions 1306 are constant. The wobble pits 1309 in the servo regions 1306 are disposed radially on the disc (the line 1401 connecting the wobble pits 1309 passes the center of the optical disc recording medium). Other than the pits, the address pits 1310, the wobble pits 1308 and the leading edge and the trailing edge of the groove 1311 are disposed in parallel with the wobble pits 1309 (the line 1402 connecting the address pits 1310, the line 1403 connecting the wobble pits 1308, and the line 1404 connecting the trailing edges of the grooves 1311 and the line 1405 connecting the leading edges of the grooves 1311 are parallel with the line 1401 connecting the wobble pits 1309). The wobble pits 1309 disposed radially are used to generate a clock for data recording in this embodiment. As a reference for the generation of the clock for recording/reproduction, the wobble pits 1308 and the trailing edge and the leading edge of the grooves 1311 other than the peak positions of the wobble pits 1309 can also be used; the pits or edges used as the reference for the generation of the clock for recording/reproduction are disposed radially on the disc, and the others are disposed in parallel.

In the optical disc recording medium in accordance with Embodiment 4, the whole of the optical disc recording medium is one zone (not divided into zones). Instead of this, the optical disc recording medium may be configured so that it has a plurality of zones divided radially and so that the line connecting one type of wobble pits in the zones passes the center of the optical disc recording medium.

When the pre-pit regions are formed so as to have a radial shape as a whole just as in the case of Embodiment 1, the area of the pre-pit region at the outer circumference becomes large, and the ratio of the area for the data recording regions in the whole surface area of the optical disc recording medium lowers (the format efficiency lowers). Since the lengths of the pre-pit regions 1306 are made constant in Embodiment 4, the format efficiency of the optical disc recording medium is improved in comparison with Embodiment 1. More specifically, a capacity of about 3% can be increased in a disc having a diameter of about 50 mm.

For example, in the sample servo system, if the wobble pits were not disposed radially (the pre-pit regions had a radial shape), it was difficult to detect the tracking error signal. In Embodiment 4 of the present invention, the pre-pit regions 1306 have a rectangular shape as a whole. FIG. 15 shows a schematic configuration of the tracking error signal detection portion of the optical disc apparatus in accordance with Embodiment 4. Numeral 1501 designates a binarization device, numeral 1502 designates a groove portion detector, numeral 1503 designates an edge window generator, numeral 1504 designates a phase comparator operating in the edge window output from the edge window generator 1503, numeral 1505 designates a voltage-controlled oscillator (VCO), numeral 1506 designates a frequency divider, numeral 1515 designates a counter, numeral 1507 designates a window generator for the first wobble pit output (a window generator for the first wobble pit), numeral 1508 designates a window generator for the second wobble pit output (a window generator for the second wobble pit), numerals 1509 and 1510 designate minimum level detectors, and numeral 1511 designates a subtracter.

The portion (c) of FIG. 13 shows a reproduced signal in the case when the segment 1305 (in the portion (b) of FIG. 13) is reproduced and also shows a part of the signal of the tracking error detection portion in the optical disc apparatus in accordance with the present invention. Numeral 1322 designates a reproduced signal at the time when the segment1305 is reproduced, numeral 1332 designates a slice level for binarizing the reproduced signal 1322, numeral 1323 designates a signal obtained by binarizing the reproduced signal, and numeral 1325 designates an edge window signal.

Since the groove portion 1311 is formed in the segment 1305 in the optical disc recording medium in accordance with the present invention, groove edge signals 1329 and 1330 are detected on the basis of the output signal from the groove portion 111. In the optical disc recording medium in accordance with the present invention, the period 1331 between the groove edge signals 1329 and 1330 on the basis of the length 1307 of the groove portion 1311 has a unique time duration detected only when the output signal of the groove portion 1311 is detected.

The binarization device 1501 receives the reproduced signal 1322 from the optical disc recording medium, slices the signal at the slice level 1332 and outputs the binarized signal 1323.

The groove portion detector 1502 receives the binarized signal 1323 and detects the unique period 1331. In the case of this embodiment, since the unique period is the longest period among the reproduced signals from the optical disc recording medium, the groove portion detector comprises a simple circuit that detects signals having a constant time or more. The groove portion detector 1502 outputs a pulse 1324 that is set by the groove edge signal 1329 and reset by the groove edge signal 1330 (the width is equal to the passing period in the pre-pit region 1306). The pulse 1324 is transmitted to the edge window generator 1503, the counter 1515, the phase comparator 1504, the window generator 1507 for the first wobble pit output and the window generator 1508 for the second wobble pit output.

The edge window generator 1503 receives the pulse 1324 output by the groove portion detector 1502, and generates and outputs a window signal 1325 generated on the basis of the rising edge 1329 of the pulse. The VCO 1505 outputs a reference clock. The frequency divider 1506 receives the reference clock and outputs a frequency division signal of 1/325.

In addition, the reference clock is transmitted to the frequency divider 1506, the counter 1515, the window generator 1507 for the first wobble pit output and the window generator 1508 for the second wobble pit output.

The phase comparator 1504 receives the pulse 1324, the frequency division signal (the output signal of the frequency divider 1506) and the window signal 1325, compares the pulse 1324 with the frequency division signal (the output signal of the frequency divider 1506) with respect to phase in the high period of the window signal 1325, and outputs the phase difference signal 1326 between the two. The phase difference signal 1326 is input to the VCO 1505. By the above-mentioned control circuit, the reference clock output from the VCO 1505 is locked to (synchronized with) the groove edge signal 1329.

The counter 1515 receives the pulse 1324 and the reference clock. The counter 1515 is reset at the rising edge (at the same timing as that of the groove edge signal 1329) of the pulse 1324, starts counting up on the basis of the reference clock input to the clock terminal, and latches the counter value g1 at the falling edge (at the same timing as that of the groove edge signal 1330) of the pulse 1324. The counter 1515 outputs and transmits the latched counter value g1 to the window generator 1507 for the first wobble pit output and the window generator 1508 for the second wobble pit output.

The window generator 1507 for the first wobble pit output receives the pulse 1324, the reference clock and the counter value g1. The window generator 1507 for the first wobble pit output contains a counter value g0, a first number h0 and a second number i0. When the width of the pulse 1324 corresponds to g0 reference pulses, and when the window signal 1327 for detection wherein a first point obtained by counting a first number h0 of the reference clock pulses starting from the rising edge of the pulse 1324 is used as the leading edge of the window signal 1327 for detection, and a second point obtained by counting a second number i0 of the reference clock pulses starting from the rising edge of the pulse 1324 is used as the trailing edge of the window signal 1327 for detection is generated, the window signal 1327 for detection includes the reproduced signal of the first wobble pit therein.

The window generator 150.7 for the first wobble pit output calculates h1 according to h1 = h0 × g1/g0 and calculates i1 according to i1 = i0 × g1/g0. The window generator 1507 for the first wobble pit output generates the window signal 1327 for detection wherein a first point obtained by counting a first number h1 of the reference clock pulses starting from the rising edge of the pulse 1324 is used as the leading edge of the window signal 1327 for detection, and a second point obtained by counting a second number i1 of the reference clock pulses starting from the rising edge of the pulse 1324 is used as the trailing edge of the window signal 1327 for detection.

Similarly, after recording the pulse 1324, the reference clock and the counter value g1, the window generator 1508 for the second wobble pit output generates and outputs the window signal 1328 for detecting the second wobble pit output. The window signal 1328 for detecting the second wobble pit output is a signal wherein a third point obtained by counting a third number j1 of the reference clock pulses starting from the rising edge of the pulse 1324 is used as the leading edge of the window signal 1328 for detection, and a fourth point obtained by counting a fourth number k1 of the reference clock pulses starting from the rising edge of the pulse 1324 is used as the trailing edge of the window signal 1328 for detection. The third number j1 corresponds to h1 and the fourth number k1 corresponds to i1.

The minimum level detector 1509 receives the reproduced signal 1322 of the optical disc recording medium and the window signal 1327 for detecting the first wobble pit output, and holds and outputs the minimum value of the reproduced signal 1322 in the period of this window signal 1327.

In a similar way, the minimum level detector 1510 receives the reproduced signal 1322 of the optical disc recording medium and the window signal 1328 for detecting the second wobble pit output, and holds and outputs the minimum value of the reproduced signal 1322 in the period of the window signal 1328. The subtracter 1511 generates and outputs the difference signal of the two minimum values. This output signal is the tracking error signal (error signal). As described above, the sample servo for the optical disc recording medium in accordance with Embodiment 4 can be attained.

FIG. 19 shows a schematic configuration of the tracking error signal detection portion of another optical disc apparatus for carrying out recording and reproduction on the optical disc recording medium in accordance with Embodiment 4. The optical disc recording medium is controlled by the sample servo using the wobble pits. The tracking error signal detection portion of FIG. 19 is applicable to both the constant rotation speed mode and the constant linear velocity mode, for example. Numeral 1901 designates a binarization device, numeral 1902 designates a groove portion detector, numeral 1903 designates an edge window generator, numeral 1904 designates a phase comparator operating in the edge window output from the edge window generator 1903, numeral 1905 designates a voltage-controlled oscillator (VCO), numeral 1906 designates a frequency divider having a frequency division ratio of 325, numeral 1907 designates a comparator for outputting the window signal of the first wobble pit output, numeral 1908 designates a comparator for outputting the window signal of the second wobble pit output, numerals 1909 and 1910 designate minimum level detectors, numeral 1911 designates a subtracter, numeral 1912, 1913 and 1915 designate counters, and numeral 1914 designates a microcomputer.

Since the waveforms at respective portions. are the same as those shown in FIG. 9, they are explained referring to FIG. 9.

FIG. 9 shows a reproduced signal in the case when the segment 1305 is reproduced and also shows a part of the signal of the tracking error detection portion in the optical disc apparatus in accordance with the present invention. Numeral 901 designates a reproduced signal at the time when the segment 1305 is reproduced, numeral 902 designates a slice level for binarizing the reproduced signal 901, numeral 903 designates a signal obtained by binarizing the reproduced signal, and numeral 907 designates an edge window signal. The phase lock loop of the VCO in accordance with the present invention has the same configuration as that of the tracking error signal detection portion of FIG. 8. The method of detecting the groove edge signals 905 and 906 is the same as that of the tracking error signal detection portion of FIG. 8.

The binarization device 1901 receives the reproduced signal 901 from the optical disc recording medium, slices the signal at the slice level 902 and outputs the binarized signal 903. The groove portion detector 1902 receives the binarized signal 903 and detects the unique period 904 between the groove edge signals 905 and 906. The groove portion detector 1902 outputs a pulse having the same edge of the groove edge signal 905.

The edge window generator 1903 receives the pulse output by the groove portion detector 1902, and generates and outputs a window signal 907 obtained by delaying the pulse. The VCO 1905 outputs a reference clock. The frequency divider 1906 having a frequency division ratio of 325 receives the reference clock, divides it into 1/325 and outputs a frequency division signal. The frequency division signal is transmitted to the phase comparator 1904. The phase comparator 1904 receives the binarized signal 903, the frequency division signal and the window signal 907, compares the binarized signal 903 with the frequency division signal with respect to phase in the high period of the window signal 907, and outputs the phase difference signal 908 between the two. The phase difference signal 908 is input to the VCO 1905. By the above-mentioned control circuit, the reference clock output by the VCO 1905 is locked to (synchronized with) the groove edge signal 905.

For example, if the number of pre-pit regions per circuit of the optical disc recording medium is constant and the constant rotation speed mode is used, the reference clock becomes a clock having a constant frequency. Since the lengths of the pre-pit regions are constant from the inner circumference to the outer circumference of the optical disc recording medium, the period during which the optical pickup passes the pre-pit region is long at the inner circumference and short at the outer circumference. The reference clock output by the VCO 1905 is transmitted to the frequency divider 1906 and the counters 1912, 1913 and 1915. The counter 1915 receives the reference clock output by the VCO 1905 and the groove edge signals 905 and 906 output by the groove portion detector 1902. The counter 1915 is reset by the groove edge signal 905, receives the 'reference clock at the clock terminal and starts counting up. The counter value is latched by the groove edge signal 906, and the counter 1915 outputs the latched counter value.

The counter value is the number of the reference clock pulses generating in a period during which the optical pickup passes the pre-pit region.

The microcomputer 1914 receives the above-mentioned counter value (the output signal of the counter 1915) and judges the counter value that determines the edges of the window signals of the wobble pits 1308 and 1309 on the basis of the counter value. For example, when the above-mentioned counter value (the output signal of the counter 1915) is a0, provided that a point-delayed by b0 reference clock pulses from the groove edge signal 905 is used as the rising edge of the first wobble signal 909 and that a point delayed by c0 reference clock pulses from the groove edge signal 905 is used as the falling edge of the first wobble signal 909, it is assumed that the first wobble signal 909 includes the reproduced signal of the first wobble pit 108 in its window. The microcomputer stores the values a0, b0 and c0 in the memory.

When the above-mentioned counter value (the output signal of the counter 1915) is a1, the rising edge of the first wobble signal 909 is a point (b1 = b0 × a1/a0) delayed by b1 reference clock pulses from the groove edge signal 905, and the falling edge of the first wobble signal 909 is a point (c1 = c0 × a1/a0) delayed by c1 reference clock pulses from the groove edge signal 905. The microcomputer carries out the above-mentioned calculations and outputs b1 and c1. In a similar way, the microcomputer outputs values d1 and e1 for determining the rising edge and the falling edge of the second wobble signal 910 (d1 corresponds to b1, and e1 corresponds to c1. The microcomputer 1914 stores d0 corresponding to b0 and stores e0 corresponding to c0).

The counter 1912 and the comparator 1907 generate the first wobble signal 909 serving as the window signal for detecting the first wobble pit. The counter 1913 and the comparator 1908 generate the second wobble signal 910 serving as the window signal for detecting the second wobble pit. The configuration of the circuit for generating the first wobble signal 909 is the same as that of the circuit for generating the second wobble signal 910. The configuration of the circuit for generating the first wobble signal 909 will be described.

The counter 1912 receives the reference clock output by the VCO 1905 and the groove edge signal 905 output by the groove portion detector 1902. The counter 1912 is reset by the groove edge signal 905, receives the reference clock at the clock terminal and starts counting up. The comparator 1907 receives the first comparison value b1 and the second comparison value c1 output by the microcomputer 1914 and the counter value output from the counter 1912, compares the first comparison value b1 with the above-mentioned counter value and compares the second comparison value c1 with the above-mentioned counter value.

The comparator 1907 outputs a pulse that is set (rises) at the coincidence point of the first comparison value b1 an the above-mentioned counter value and is reset (falls) at the coincidence point of the second comparison value c1 and the above-mentioned counter value. This pulse is the first wobble signal 909 having its rising edge at the point delayed by b1 reference clock pulses from the groove edge signal 905 and having its falling edge at the point delayed by c1 reference clock pulses from the groove edge signal 905. The second wobble signal 909 is generated in a similar way by the counter 1913 and the comparator 1908.

The minimum level detector 1909 receives the reproduced signal 901 of the optical disc recording medium and the window signal 909 for detecting the first wobble pit output, and holds and outputs the minimum value of the reproduced signal 901 in the period of this window signal 909. In a similar way, the minimum level detector 1910 receives the reproduced signal 901 of the optical disc recording medium and the window signal 910 for detecting the second wobble pit output, and holds and outputs the minimum value of the reproduced signal 901 in the period of this window signal 910. The subtracter 1911 generates and outputs the difference signal of the two minimum values. This output signal is the tracking error signal (error signal).

The bottom portion of the reproduced signal of the wobble pit should only be present in each of the window signal for detecting the first wobble pit output and the window signal for detecting the second wobble pit output. In other words, if the bottom portion of the reproduced signal of the wobble pit is present in the window signals for detection, and if the pit positions, the distances between the pits, the positions of the pre-pit regions, the lengths of the pre-pit regions, etc. are nearly constant to the extent that the level of the bottom portion can be detected, the tracking operation is not affected at all, even if the pit positions and the like have some errors.

The present invention wherein the length of the pre-pit region in the inner circumference of-the optical disc recording medium is made equal to the length of the pre-pit region in the outer circumference is also applicable not only to an optical disc recording medium having data recording regions provided only in the groove portions (Embodiment 4) but also to an optical disc recording medium having data recording regions provided only in the inter-groove portions and an optical disc recording medium conforming to the land/groove system.

### [Embodiment 5]

Embodiment 5 in accordance with the present invention will be described below in detail referred to FIG. 16. The portion (a) of FIG. 16 schematically shows the overall configuration of the optical disc recording medium in accordance with the present invention. In the portion (a) of FIG. 16, numeral 1601 designates an optical disc substrate, numeral 1602 designates a recording film (corresponding to the reproduction layer 13, the intermediate layer 14 and the recording layer 15 in FIG. 1), numeral 1603 designates a first track, numeral 1604 designates a second track adjacent to the first track, numeral 1605 designates a segment obtained by dividing each of the first track 1603 and the second track 1604 into 1280 pieces, and numeral 1606 designates a pre-pit region (pre-format region) including tracking servo-pits and an address pit indicating the positional information on the optical disc recording medium.

The portion (b) of FIG. 16 is a magnified view showing the pre-pit region 1606. In the portion (b) of FIG. 16, numeral 1605 designates a segment (comprising one data recording region and one pre-pit region), numeral 1606 designates the pre-pit region, a groove portion 1611 and an inter-groove portion (land portion) 1614, each having a length of 1607, are data recording regions for recording data. The optical disc recording medium in accordance with the present invention adopts the land/groove system wherein the groove portions and the inter-groove portions are used as the data recording regions. The pre-pit region 1606 has wobble pits 1608 and 1609 for detecting the tracking signal and an address pit 1610 wherein address information indicating the information of the position on the optical disc recording medium is dispersed at the start of the segment, one bit in each segment. The boundary portion between the groove portion and the inter-groove portion adjacent to each other is separated magnetically from each other.

In order to obtain the groove shutoff effect required for DWDD in the land/groove system, a groove depth of about 120 nm or more is required. 120 nm corresponds to about (1/3.5)λ or more in the case of red laser light, and to about λ/2.2 or more in the case of blue laser light, thereby being considerably larger than the groove depths of λ/8 to λ/6 of the prior art optical disc recording medium. When forming a groove having a depth of 120 nm or more as described above, in order to obtain both the tracking error signal and the amount of reflected light from the groove, it was conventionally considered that a groove depth in the range of 2λ/(6 n) to 3λ/(8 n) or in the range of 5λ/(8 n) to 4λ/(6 n) and the like was optimal.

However, it is difficult to form completely rectangular grooves as described above. When deep grooves are formed by the injection method in particular, that is, a method generally used to form plastic substrates, it is very difficult to make the angle of the slant face close to 90° . If the slant face of the groove has an inclination (not 90 degrees), the amount of reflected light from the groove decreases, and sufficient S/N cannot be obtained. When the depth of the groove becomes large in particular, this phenomenon becomes very significant, whereby, although an amount of reflected light of about 70% (the amount of reflected light from the flat portion is assumed to be 100%) was obtained from an optical disc recording medium provided with groove portions having a depth of λ/(8 n), an amount of reflected light of only about 30% is obtained from an optical disc recording medium provided with groove portions having a depth of 3λ/(8 n).

This was the great cause of the worsening of S/N and made the practical use of the optical disc recording medium conforming to the DWDD system difficult. The optical disc recording medium in accordance with the present invention is provided with groove portions having a depth close to λ/(2 n) and also provided with wobble pits for sample servo, whereby an optical disc recording medium conforming to the DWDD system can be attained. In other words, the optical disc recording medium in accordance with the present invention has pre-pit regions for tracking servo and data recording regions, separated from each other.

Just as in the case of Embodiment 3, in Embodiment 5, optical disc recording media, in which the depths of the groove portion 1611, the wobble pits 1608 and 1609 and the address pit 1610 were set at 140 nm, 160 nm, 180 nm and 200 nm, were produced by way of trial. The results of the examination are shown in Table 3.

Table 3 shows the results of the ratio of (the tracking error amplitude by wobble pits/the amount of reflected light from flat portion), the ratio of (the error signal conforming to the push-pull system/the amount of reflected light from flat portion), the percentage of (the amount of reflected light from data recording region/the amount of reflected light from flat portion) (in the case of the indication in Table 3, the track light amount ratio/the amount of reflected light from flat portion), jitter and error rate at each depth.

**[Table 3]**

| Depth | Tracking error amplitude /amount of light from flat portion | Push-pull/ amount of light from flat portion | Track light amount ratio/amount of light from flat portion | Jitter | Error rate |
|---|---|---|---|---|---|
| 140nm | 1.4 | 0.6 | 30% | 18% | 2.5E-1 |
| 160nm | 1.2 | 0.6 | 35% | 15.8% | 5.3E-2 |
| 180nm | 0.7 | 0.1 | 55% | 8.5% | 6.0E-5 |
| 200nm | 0.6 | 0.02 | 65% | 8% | 2.2E-5 |

The deeper the groove portion, the smaller the ratio of (the tracking error amplitude/the amount of reflected light from flat portion); however, even the wobble pit having a depth of 200 nm can obtain an amount of reflected light 0.6 times (60%) the amount of reflected light from the flat portion. Hence, just as in the case of Embodiment 3, it has been found that the error signal due to wobble pits from an optical disc recording medium provided with wobble pits having a depth of 120 nm or more does not have the theoretical level indicated by the solid line in the portion (b) of FIG. 21 but has the measured level indicated by the broken line in the portion (b) of FIG. 21. In other words, theoretically, no error signal is output at all from the wobble pits having a depth of λ/(2 n); however, in reality, a sufficiently large error signal (having an amplitude 0.6 times the amount of reflected light from the flat portion) can be obtained from the wobble pits having the depth of λ /(2 n).

The level of the error signal indicated by the solid line in the portion (b) of FIG. 21 is based on an assumption that the side walls of the groove portions and the pits have 90 degrees. However, the side walls of the pits in an actual optical disc recording medium have an inclination of about 70 degrees because of the forming by the injection method. It is speculated that a sufficiently large error signal can be obtained from the wobble pits having a depth of λ/(2 n) by the reflected light from the slant faces.

On the other hand, when the ratio of (the error signal conforming to the push-pull system/the amount of reflected light from the flat portion) is examined, in the case when the depth of the groove is more than 180 nm, it is nearly impossible to obtain an error signal conforming to the push-pull system. In the portion (b) of FIG. 21 indicating the theoretical value of the tracking error signal by the solid line, the error signal conforming to the push-pull system has the shape of a sine curve (shaped waveform) that becomes maximum at h = λ/(8 n) and h = (3λ)/(8 n) and becomes minimum at h = 0, h = λ/(4 n) and h = λ /(2 n).

Hence, it has been found that the qualitative inclination of the measured value of the error signal conforming to the push-pull system coincides with that of the theoretical value thereof.

In addition, the amount of reflected light from the data recording regions is only about 30% of the amount of reflected light from the flat portion in an optical disc recording medium provided with groove portions having a depth of 140 nm (the data recording regions are provided in the inter-groove portions and the groove portions); however, in an optical disc recording medium provided with groove portions having a depth of 200 nm, the amount of the reflected light increases to about 65% of the amount of reflected light from the flat portion. Hence, just as in the case of Embodiment 3, it has been found that the output level of the reproduced signal from an optical disc recording medium provided with groove portions having a depth of 120 nm or more is not the theoretical level indicated by the solid line in the portion (a) of FIG. 21 but the measured level indicated by the broken line in the portion (a) of FIG. 21.

From the viewpoint of the amplitude of the tracking error, the depth of the groove portion is preferably about 140 nm, and from the viewpoint of the S/N of the reproduced signal, the depth of the groove portion is preferably larger (200 nm). However, tracking control can be carried out sufficiently by obtaining the amount of reflected light from the wobble pits that is 0.6 times the amount of reflected light from the flat portion; on the other hand, when the amount of light is about 30% of the amount of reflected light from the flat portion, the S/N ratio of the reproduced signal becomes insufficient. When the error rate of the reproduced signal read from the optical disc recording medium in accordance with Embodiment 5 conforming to the land/groove system is viewed, it is possible to obtain an error rate that can be used practically, when the groove depth is about 180 nm (7λ/(16 n) in the case of red laser light of 660 nm) or more.

In the land/groove system, it was general that the tracking servo conforming to the push-pull system was carried out conventionally; however, in an optical disc recording medium provided with groove portions having a depth of 200 nm, the tracking error signal conforming to the push-pull system shown in Table 3 becomes very small, whereby it is difficult to carry out tracking servo in conformity with the push-pull system.

On the other hand, when wobble pits are used, a sufficiently large tracking error signal (the amount of reflected light is about 0.6 times the amount of reflected light from the flat portion) can be obtained even in the vicinity of λ/(2 n) as shown in Table 3. This is based on that fact that the side walls of the pits have about 65 degrees because of the forming by the injection method. Hence, instead of the tracking servo system conforming to the push-pull system, the sample servo system using the wobble pits is adopted. In a similar way, as the groove depth becomes larger and close to λ/(2 n) (depth: 209 nm), the amount of reflected light from the data recording region increases, whereby jitter and error rate are improved in comparison with the optical disc recording medium provided with shallow groove portions (140 nm).

It was conventionally speculated that the optimal groove depth in a range of not less than 120 nm was (3λ)/(8 n) (when n = 1.58 (polycarbonate) and when red laser light (wavelength: 660 nm) was used, 3 λ/(8 n) was 156 nm). However, as a result of the above-mentioned experiment, the inventors of the present invention have found that the optimal depth in a range of not less than 120 nm is not (3λ)/(8 n), a value speculated to be optimal conventionally, but λ /(2 n) = about 200 nm. Theoretically, no error signal is delivered at all from the wobble pits having a depth of λ/(2 n); however, in reality, a sufficiently large error signal (having an amplitude 0.6 times the amount of reflected light from the flat portion) can be obtained from the wobble pits having a depth of λ /(2 n). In addition, the amount of reflected light obtained from the groove portions 1611 having a depth of λ/(2 n) is sufficiently large. Furthermore, the amount of reflected light obtained from the data recording region of the inter-groove portion 1614 is nearly equal to the amount of reflected light obtained from the data recording region of the groove portion 1611.

As described above, the optical disc recording medium in accordance with the present invention has a configuration wherein the data recording regions are formed in conformity with the land/groove system and the groove portions and the pits have a depth of about λ/(2 n); hence, signal reproduction in conformity with the high-performance DWDD system is made possible at a high-density track pitch, which was impossible conventionally.

In the above-mentioned embodiments, the recording film had the configuration shown in FIG. 1. In another embodiment, the recording film comprises four layers: a reproduction layer for detecting information from magnetic domains expanded by the displacement of domain walls, a control layer for decreasing ghosts, an intermediate layer for controlling the exchange coupling between the reproduction layer and a recording layer and the recording layer for holding information. In other words, in comparison with the optical disc recording medium in accordance with Embodiment 1, the control layer is provided between the reproduction layer and the intermediate layer. The configuration of the recording film is not limited to the above-mentioned configuration, but any configurations may be used if reproduction conforming to the DWDD system is possible on the recording layer.

In the optical disc recording media in accordance with the above-mentioned embodiments, the center point of the line connecting a pair of wobble pits is positioned on the longitudinal extension line of the physical center line of the groove portion or the inter-groove portion (the wobble pits used as a pair are disposed at different positions on the longitudinal extension line of the center line of the groove portion or the inter-groove portion, shifted left and right from the above-mentioned extension line by the same distance). However, in an actual optical disc recording medium, the center of the data recording region (the optical center) does not necessarily coincide with the center of the groove portion or the inter-groove portion (the physical center). In the case when the center of the optical beam differs from the center of magnetic separation as described above, a magneto-optical recording mark is recorded by using the center of the magnetic separation as the center, since magnetic energy is lower when the magnetically separated portion is on the side end of the mark. This occurs because the magnetic shutoff from the left adjacent data recording region does not coincide with the magnetic shutoff from the right adjacent data recording region, or because optical balance is lost owing to the asymmetry of the shape of the groove in the left-right direction. This becomes particularly significant in a tracking system that uses the tracking error signal from the grooves.

Because of these reasons, the actual center of the data recording region may be shifted from the center of the groove portion or the inter-groove portion to one side. The inventors of the present invention have found that this shift occurs in an optical disc recording medium that carries out reproduction in conformity with the DWDD system, for example, and that this shift is not negligible in an optical disc recording medium having a track pitch of 1 µm or less, for example. This peculiar shift (off-track) occurring on the magnetically separated track greatly decreases the margin of the off-track during reproduction. In the prior art optical disc recording medium, no great problem was caused, since the displacement of the domain walls is not used. However, in a system such as the DWDD system that carries out reproduction by using the displacement of domain walls, the displacement amount of the domain walls changes depending on thermal distribution; hence, great jitter is caused if the thermal distribution differs on the left and right of the track. Therefore, this off-track greatly affects reproduction in the DWDD system, and even a small amount of off-track, which did not cause problems conventionally, results in big problems.

However, a displacement amount of the center of an effective data recording region from the center of the groove portion or the inter-groove portion becomes a nearly constant value determined depending on the production method of the optical disc recording medium. Hence, in the optical disc recording medium in accordance with another embodiment, wobble pits are disposed so that the center point of the line connecting a pair of wobble pits is at a position away from the longitudinal extension line of the center line of the above-mentioned groove portion or inter-groove portion (the wobble pits used as a pair are disposed at different positions on the longitudinal extension line of the center line of the groove portion or the inter-groove portion, shifted left and right from the above-mentioned extension line by different distances). In other words, the pair of wobble pits is formed so that the center point of the line connecting the pair of wobble pits is positioned on the longitudinal extension line of the center line of the effective data recording region.

As described above, by shifting the center point of the line connecting the pair of wobble pits from the physical center of the groove portion or the inter-groove portion or the physical centers of the both, the center of the magnetic separation can be aligned with the tracking center of the light beam. With this configuration, the off-track margin during reproduction, conventionally attainable up to only about ±0.5 µm, was able to be expanded to about ±0.1 µm, thereby being very effective.

Furthermore, in the land/groove system wherein the groove portions and inter-groove portions are used for recording tracks, more significant effects are obtained in addition to the off-track margin during reproduction.

In an ordinary recording-type optical disc recording medium, there is a task of resulting in erasure at adjacent tracks when recording is carried out at high recording power; hence, control for recording at recording power for not erasing the adjacent tracks is carried out. When the track pitch becomes narrower, the allowable maximum power for not erasing the adjacent tracks during recording lowers, and a margin regarding recording power becomes small. In the DWDD system, reproduction is carried out by using the displacement of domain walls, whereby great influence is exerted by slight erasure. In particular, the offset of a recording track from the center of the above-mentioned magnetic separation in conformity with the DWDD of the land/groove system results in decreasing the distance between adjacent tracks during recording. Hence, the erasure characteristic for adjacent tracks at lands greatly differs from that at grooves, resulting in the asymmetry of the power margin between the lands and grooves. This caused a serious problem of being unable to obtain a recording power margin in the DWDD of the land/groove system.

However, by shifting the center point of the line connecting the pair of wobble pits from the physical centers of the groove portions and the inter-groove portions by the above-mentioned configuration, the center of the magnetic separation can be aligned with the tracking center of the light beam. As a result, the power margin was able to be improved greatly from a conventional value of ±8% to ±27%.

By carrying out tracking servo so that the error signal of the output signal generated from the pair of wobble pits becomes zero, the optical pickup is accurately put on-track in the data recording region, whereby the maximum reproduced signal can be obtained from the optical pickup. Furthermore, there is no problem of incomplete erasure (which occurs owing to the deviation and the like between the data recording region of a signal already recorded and the data recording region of a signal to be newly overwritten) and the like at the time of overwriting. In the above-mentioned optical disc recording medium, the data recording region may be provided only in the groove portion or may be provided only in the inter-groove portion, or the land/groove system may also be used.

In the optical disc recording medium conforming to the land/groove system, the amount of shift of the center of the data recording region provided in the groove portion from the center of the groove portion nearly coincides with the amount of shift of the center of the data recording region provided in the inter-groove portion from the center of the inter-groove portion.

Hence, even in an optical disc recording medium wherein one wobble pit disposed between the first track and the second track being adjacent to each other is also used as one of the above-mentioned pair of wobble pits on the above-mentioned first track and as one of the above-mentioned pair of wobble pits on the above-mentioned second track, by disposing the wobble pits so that the center point of the line connecting the pair of wobble pits is disposed away from the longitudinal extension line of the center line of the above-mentioned groove portion or inter-groove portion, accurate tracking servo can be attained even in the groove portion and the inter-groove portion.

The present invention can obtain an advantageous effect that can attain an optical disc recording medium capable of carrying out reproduction in conformity with the DWDD system while the groove portions and the pair of wobble pits are provided and tracking servo is performed. In other words, it is possible to carry out tracking servo conforming to the sample servo system in which the pair of wobble pits is used during recording or reproduction on the optical disc recording medium in accordance with the present invention in conformity with the high-density DWDD system.

In the optical disc recording medium in accordance with the present invention, since the pre-pit regions are aligned in the radial direction of the optical disc recording medium, tracking control can be done easily. In particular, by providing the address pits described in the Japanese Patent Application No. Hei 11-021885, seek operation can be done very easily. Furthermore, one wobble pit disposed between the first track and the second track being adjacent to each other is used as one of the pair of wobble pits for each track, whereby the track pitch can be decreased further, and an optical disc recording medium capable of carrying out high-density recording can be attained.

In the present invention, the data recording regions adjacent to each other are mutually shut off magnetically; hence, the present invention can obtain an advantageous effect that can attain an optical disc recording medium capable of obtaining a reproduced signal having a sufficiently large reproduction level and a sampling servo signal. The above-mentioned effect is obtained by making the depth of the pits identical to that of the groove portions in particular; furthermore, an advantageous effect that can attain a magnetic recording medium having no roughness on the surface and being produced easily is obtained. The present invention can obtain an advantageous effect that can attain an optical disc recording medium capable of recording information at higher density. The present invention can obtain an advantageous effect that can attain an optical disc recording medium capable of obtaining a sampling servo signal capable of carrying out accurate on-track operation to the centers of effective data recording regions.

The present invention can obtain an advantageous effect that can attain an optical disc apparatus capable of easily detecting the output levels of pits. The present invention can obtain an advantageous effect that can attain an optical disc apparatus capable of carrying out reproduction on an optical disc recording medium of high recording density, wherein the lengths of the pre-pit regions are nearly constant in the optical disc recording medium or in zones obtained by dividing the optical disc recording medium in the radial direction.

By producing an optical disc recording medium provided with groove portions particularly serving as data recording regions from an original master produced by the original master production method in accordance with the present invention, the width of the recording track (the width of the groove portion) can be made larger while the track pitch is constant, whereby the present invention can obtain an advantageous effect that can attain a method of producing an original master for an optical disc recording medium capable of obtaining a high reproduction output level at the constant track pitch because of the small depth of the groove portion. By producing an optical disc recording medium provided with groove portions particularly serving as data recording regions from the original master produced by the original master production method in accordance with the present invention, the present invention can obtain an advantageous effect that can attain a method of producing an original master for an optical disc recording medium suited for reproduction conforming to the DWDD system.

Although the present invention has been described with respect to its preferred embodiments in some detail, the disclosed contents of the preferred embodiments may change in the details of the structure thereof, and any changes in the combination and sequence of the components may be attained without departing from the scope and spirit of the claimed invention.

### INDUSTRIAL APPLICABILITY

The present invention is useful as a recording medium for recording, for example, video signals, audio signals and other various information, and also useful as an optical disc recording apparatus and a method of producing an original master for the recording medium.

## Claims

1. An optical disc recording medium comprising:
tracks disposed spirally or concentrically,
said track having segments divided into a plurality of regions,
said segment having a pre-pit region provided with a region for generating a tracking signal for tracking said track, and a data recording region for recording data, wherein
said data recording region is formed of either a groove or an inter-groove, said data recording region is formed of a recording/reproduction film for recording/reproducing recorded information at high density by the displacement of domain walls,
said recording/reproduction films disposed in said data recording regions of said tracks adjacent to each other are shut off magnetically by the step of said groove or inter-groove or at portions changed in quality by the processing of a beam for tracking by using the groove or inter-groove formed between the data recording regions of said adjacent tracks as a guide,
the region for generating said tracking signal comprises a pair of wobble pits which are shifted left and right from the longitudinal direction of said track and disposed at different positions in the longitudinal direction, and
the pitch of said tracks is not more than 1.1 times the half width of a light beam for carrying out recording/reproduction on said data recording regions.

2. An optical disc recording medium comprising:
tracks disposed spirally or concentrically,
said track having segments divided into a plurality of regions,
said segment having a pre-pit region provided with a region for generating a tracking signal for tracking said track, and a data recording region for recording data, wherein
said track comprises a first track and a second track adjacent to each other, said data recording region of said first track comprises a groove, and said data recording region of said second track comprises an inter-groove, said data recording region is formed of a recording/reproduction film for recording/reproducing recorded information at high density by the displacement of domain walls,
said recording/reproduction films disposed in said data recording regions of said tracks adjacent to each other are shut off magnetically by the step of said groove,
the region for generating said tracking signal comprises a pair of wobble pits which are shifted left and right from the longitudinal direction of said track and disposed at different positions in the longitudinal direction, and
the groove depth in said recording region is larger than 3λ/(8 n) (n: the refractive index of the optical disc substrate, λ: the wavelength of reproduction light), and the angle of the slant faces of said wobble pit faces is 80 degrees or less.

3. An optical disc recording medium comprising:
tracks disposed spirally or concentrically,
said track having segments divided into a plurality of regions,
said segment having a pre-pit region provided with a region for generating a tracking signal for tracking said track, and a data recording region for recording data, wherein
said data recording region is formed of either a groove or an inter-groove, the region for generating said tracking signal comprises a pair of wobble pits which are shifted left and right from the longitudinal direction of said track and disposed at different positions in the longitudinal direction, and the pitch of said tracks is not more than 1.1 times the half width of a light beam for carrying out recording/reproduction on said data recording regions.

4. An optical disc recording medium in accordance with any one of claims 1 to 3, wherein said tracks disposed spirally or concentrically comprise a first track and a second track being adjacent to each other, one wobble pit disposed on said first track also serves as one of said pair of wobble pits disposed on said second track, and one wobble pit disposed on said second track also serves as one of said pair of wobble pits disposed on said first track.

5. An optical disc recording medium in accordance with claims 1 to 3, wherein said pre-pit region includes said pair of wobble pits and at least one address pit disposed on said recording track.

6. An optical disc recording medium in accordance with claims 1 to 3, wherein the bottom face of said pit and the bottom face of said groove portion are on nearly the same plane, and
the height of the upper face of said inter-groove portion, measured from the bottom face of said groove portion, is smaller than the height of the upper face of said pre-pit region.

7. An optical disc recording medium comprising:
tracks disposed spirally or concentrically,
said track having segments divided into a plurality of regions,
said segment having a pre-pit region provided with a region for generating a tracking signal for tracking said track, and a data recording region for recording data, wherein
said data recording region is formed of a groove or an inter-groove, or a groove and an inter-groove, and the length of said pre-pit region is constant in said optical disc recording medium or constant in a zone divided in the radial direction.

8. An optical disc recording medium in accordance with claim 7, wherein one end of said groove portion constituting said data recording region is aligned in the radial direction.

9. An optical disc recording medium in accordance with claim 7, wherein one of said pair of wobble pits constituting said pre-pit region is aligned in the radial direction.

10. An optical disc recording medium in accordance with any one of claims 7 to 9, wherein said tracks disposed spirally or concentrically comprise a first track and a second track being adjacent to each other, one wobble pit disposed on said first track also serves as one of said pair of wobble pits disposed on said second track, and one wobble pit disposed on said second track also serves as one of said pair of wobble pits disposed on said first track.

11. An optical disc recording medium in accordance with claim 7, wherein said pre-pit region further includes at least one address pit disposed on said recording track.

12. An optical disc recording medium in accordance with claim 7, wherein the pitch of said tracks is not more than'1.1 times the half width of a light beam for carrying out recording/reproduction on said data recording regions.

13. An optical disc recording medium in accordance with claim 7, wherein the bottom face of said pit and the bottom face of said groove portion are on nearly the same plane, and
the height of the upper face of said inter-groove portion, measured from the bottom face of said groove portion, is smaller than the height of the upper face of said pre-pit region.

14. An optical disc recording medium in accordance with claim 7, wherein the depth of said groove portion, measured from the upper face of said inter-groove portion, is larger than 3λ/(8 n) (n: the refractive index of the optical disc substrate, λ: the wavelength of reproduction light), and the angle of the slant face between said groove portion and said inter-groove portion is 80 degrees or less, and
said data recording regions adjacent to each other are magnetically shut off from each other.

15. An optical disc recording medium in accordance with claim 1 or 7, wherein the center of said track obtained on the basis of said pair of wobble pits is deviated from the center line of said groove portion or inter-groove portion for forming said data recording region.

16. An optical disc apparatus for carrying out reproduction on an optical disc recording medium comprising tracks disposed spirally or concentrically, said track having segments divided into a plurality of regions, said segment having a pre-pit region provided with a region for generating a tracking signal for tracking said track, and a data recording region for recording data, and said data recording region having a region formed of a groove or an inter-groove, or a groove and an inter-groove, wherein
at least one of the leading and trailing ends of said groove portion or said inter-groove portion or both said groove portion and said inter-groove portion constituting said data recording region is detected, and the presence/absence of a pit in said pre-pit region or the reproduction level of said pit is detected on the basis of the detected positional information.

17. An optical disc apparatus for carrying out reproduction on an optical disc recording medium comprising tracks disposed spirally or concentrically, said track having segments divided into a plurality of regions, said segment having a pre-pit region provided with a region for generating a tracking signal for tracking said track, and a data recording region for recording data, said data recording region being formed of a groove or an inter-groove, or a groove and an inter-groove, and the length of said pre-pit region being constant in said optical disc recording medium or constant in a zone divided in the radial direction, wherein
both the leading end and the trailing end of said groove or said inter-groove or said groove and said inter-groove constituting said data recording region is detected, and the presence/absence of a pit in said pre-pit region or the reproduction level of said pit is detected on the basis of the detected positional information.

18. A method of producing an original master for an optical disc recording medium, having a step for radiating a laser beam to a resist on an original master, wherein the height of said resist for forming an inter-groove portion, measured from the surface of said original master, is made lower than the height of said resist before the radiation of said laser beam by mutually interfering laser beams for forming adjacent groove portions.
